# FASCICULE DE BREVET EUROPEEN

(11) **EP 3 236 097 B1**
(45) Date de publication et mention de la délivrance du brevet: **26.09.2018**
(21) Numéro de dépôt: 17165597.0
(22) Date de dépôt: 07.04.2017
(51) Int. Cl.: F16D 13/75, F16D 21/06

(54) **DISPOSITIF D'EMBRAYAGE A RATTRAPAGE D'USURE, NOTAMMENT POUR VEHICULE AUTOMOBILE**
KUPPLUNGSVORRICHTUNG MIT VERSCHLEISSAUSGLEICH, INSBESONDERE FÜR KRAFTFAHRZEUG
CLUTCH DEVICE WITH WEAR COMPENSATION, IN PARTICULAR FOR MOTOR VEHICLE

(30) Priorité: 21.04.2016 FR 1653545
(43) Date de publication de la demande: 25.10.2017
(73) Titulaire: Valeo Embrayages, 80009 Amiens Cedex 2 (FR); Valeo Pyeong Hwa Co., Ltd., Daegu 704-190 (KR)
(72) Inventeur: LEBAS, Gilles, 80009 Amiens (FR); COMMEINE, Emmanuel, 80009 Amiens (FR); JAFFRES, Aurélien, 80009 Amiens (FR); KIM, Hyunsu, Daegu 704-190 (KR); KIM, Sangin, Daegu 704-190 (KR); SHIN, Hyosik, Daegu 704-190 (KR)
(74) Mandataire: Cardon, Nicolas

(56) Documents cités:
- EP-A1- 2 682 626
- DE-A1- 10 016 189
- DE-A1-102011 018 592
- FR-A1- 2 780 119

## Description

La présente invention concerne un dispositif d'embrayage à rattrapage d'usure, notamment pour véhicule automobile.

Un dispositif d'embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Un dispositif d'embrayage à rattrapage d'usure est connu du document FR 2 780 119. Ce dispositif comporte un couvercle à l'intérieur duquel est monté un plateau de pression destiné à venir en appui sur un disque de friction, un diaphragme intercalé entre le couvercle et le plateau de pression, servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression.

Des moyens de rattrapage de l'usure du disque de friction sont intercalés entre le diaphragme et le plateau de pression, et comprennent au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position angulaire de la rampe par rapport à la contre-rampe.

Le dispositif comporte en outre des moyens de détection de l'usure aptes à autoriser le déplacement de l'organe de rattrapage mobile en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage et comportant une rampe coopérant avec une contre-rampe tournée du côté du plateau de pression.

Le dispositif comporte enfin un organe presseur venant contraindre les rampes desdits organes mobiles contre les contre-rampes associées, l'organe presseur étant apte à coopérer avec une butée fixe, de manière à libérer lesdits organes mobiles lorsqu'une usure du disque de friction est détectée.

L'organe de rattrapage mobile est sollicité à l'aide d'un ressort, de façon à rattraper le jeu entre celui-ci et l'organe presseur, lorsque ledit organe de rattrapage mobile est libéré par l'organe presseur et par le diaphragme. Par ailleurs, l'organe de détection mobile est sollicité par un autre ressort de façon à rattraper le jeu entre celui-ci et l'organe presseur, lorsque ledit organe de détection mobile est libéré par l'organe presseur et par le diaphragme.

En fonctionnement, l'ensemble est soumis, de façon alternée, à des phases successives d'embrayage et de débrayage.

En phase d'embrayage, le diaphragme appuie sur le plateau de pression, par l'intermédiaire de l'organe de rattrapage de jeu. En phase de débrayage, le plateau de pression est rappelé vers sa position de débrayage, par l'intermédiaire de moyens de rappel prenant généralement la forme de languettes élastiquement déformables.

Lorsque le disque de friction n'est pas usé et que les contre-matériaux des plateaux de pression et de réaction ne sont pas usés, l'organe presseur maintient constamment l'organe de détection et l'organe de rattrapage en appui sur le disque de pression : lesdits organes sont immobilisés.

En cas d'usure, l'organe presseur vient en appui sur la butée et un jeu se crée entre l'organe presseur et l'organe de détection. Comme ce dernier est contraint par un ressort, il est déplacé de façon à combler le jeu précité. En position embrayée, l'effort appliqué par le diaphragme sur l'organe de rattrapage empêche le déplacement de ce dernier, par appui et frottement sur le plateau de pression. Ensuite, lorsque le diaphragme est déplacé dans sa position débrayée, les languettes de rappel du plateau de pression tendent à plaquer le plateau de pression contre l'organe de rattrapage de jeu, et l'organe de rattrapage de jeu contre le diaphragme. L'effort exercé par les languettes de rappel est relativement faible de façon à autoriser, malgré les frottements en jeu, un déplacement de l'organe de rattrapage de jeu, sous l'effet de la contrainte appliquée par le ressort correspondant. Ce déplacement permet de rattraper le jeu entre l'organe presseur et l'organe de rattrapage. On rattrape ainsi l'usure du plateau de friction ainsi que l'usure des contre-matériaux des plateaux de pression et de réaction associés.

Un tel fonctionnement nécessite notamment l'utilisation de moyens de rappel du plateau de pression exerçant des efforts relativement faibles, pour permettre le déplacement de l'organe de rattrapage malgré les frottements en jeu. Ceci nuit au fonctionnement car de tels moyens de rappel peuvent transmettre des vibrations axiales et générer des phénomènes de pompage du plateau de pression.

Afin de remédier à cet inconvénient, la demande de brevet FR 3 009 592, au nom de la Demanderesse, propose un dispositif d'embrayage à rattrapage d'usure, notamment pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression. Le dispositif d'embrayage comprend un mécanisme de rattrapage d'usure comportant :
- des moyens de rattrapage de l'usure du disque de friction étant intercalés entre le diaphragme et le plateau de pression, lesdits moyens de rattrapage d'usure comportant au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe,
- des moyens de détection de l'usure aptes à autoriser le déplacement dudit organe de rattrapage mobile en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du plateau de pression,
- au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée,

- l'organe de rattrapage mobile étant sollicité de façon à se déplacer lorsque ledit organe de rattrapage mobile est libéré par le diaphragme,
- l'organe de détection mobile étant sollicité de façon à se déplacer et rattraper, au moins en partie, le jeu entre celui-ci et l'organe presseur, lorsque ledit organe de détection mobile est libéré par l'organe presseur et par le diaphragme.

De plus, le diaphragme libère l'organe de détection mobile et empêche le déplacement de l'organe de rattrapage mobile, en position totalement embrayée, et le diaphragme libère l'organe de rattrapage mobile et empêche le déplacement de l'organe de détection mobile, en position totalement débrayée, le diaphragme venant toujours en appui sur l'un au moins desdits organes mobiles entre ses positions totalement embrayée et totalement débrayée.

De cette manière, les moyens de rappel du plateau de pression peuvent exercer un effort important, cet effort étant repris par l'organe de rattrapage mobile puis par le diaphragme, ou par l'organe de détection mobile puis par le diaphragme, en fonction de la position du diaphragme. En effet, lors de leurs déplacements, lesdits organes mobiles ne sont pas soumis à l'effort exercé par les moyens de rappel du plateau de pression et il est donc possible de solliciter aisément leur déplacement, en cas d'usure.

Comme indiqué précédemment, le fait de disposer de moyens de rappel du plateau de pression exerçant un effort important, tels par exemple que des languettes ressorts ayant une forte raideur, permet de limiter la transmission des vibrations axiales et d'éviter les phénomènes de pompage du plateau de pression.

L'organe de détection mobile et l'organe de rattrapage mobile sont sollicités par des organes élastiques, par exemple des ressorts de traction.

En particulier, au moins un premier ressort de traction s'étendant circonférentiellement est monté entre l'organe de détection et le plateau de pression, ou entre l'organe de détection et un couvercle couplé en rotation au plateau de pression. Des seconds ressorts de traction s'étendant circonférentiellement sont montés entre l'organe de détection et l'organe de rattrapage. Ces seconds ressorts assurent la fonction de motorisation de l'organe de rattrapage par rapport à l'organe de détection.

La demande de brevet FR 3 009 592 applique également de tels moyens de rattrapage d'usure à un double embrayage.

On rappelle qu'un double embrayage permet notamment de coupler alternativement l'arbre du moteur du véhicule avec deux arbres coaxiaux d'entrée d'une boîte de vitesses, qui peut être du type robotisée.

Ainsi, un double embrayage permet de changer de rapport de vitesses tout en maintenant la transmission d'un couple moteur aux roues du véhicule. En effet, les deux embrayages sont associés respectivement à des rapports de vitesses pairs et impairs. Lors d'un changement de rapport de vitesses, un premier embrayage est débrayé alors que le second embrayage est embrayé, si bien que le couple moteur est transféré progressivement du premier au second embrayage.

Chaque embrayage comprend un mécanisme comportant un diaphragme destiné à coopérer avec un plateau de pression solidaire en rotation du couvercle et de l'arbre du moteur. Chaque diaphragme est déplaçable au moyen d'une butée d'embrayage correspondante, entre une position de repos et une position active. Selon le type d'embrayage, la position active du diaphragme correspond à un couplage ou à un découplage des arbres du moteur et de la boîte de vitesses et la position de repos du diaphragme correspond à un découplage ou un couplage de ces arbres. On parle alors respectivement d'embrayage normalement ouvert et d'embrayage normalement fermé.

Pour des raisons de sécurité, l'un au moins des embrayages est du type normalement ouvert.

La butée d'embrayage est commandée par un actionneur piloté par un calculateur électronique afin d'exercer une force prédéterminée sur le diaphragme et de le déplacer sur une distance donnée.

Le plateau de pression de chaque embrayage, sollicité par le diaphragme correspondant, est destiné à serrer un disque de friction sur un plateau de réaction correspondant. Un plateau de réaction peut être prévu pour chaque embrayage. En variante, on utilise un seul plateau de réaction commun aux deux embrayages, monté entre les deux disques de friction.

Chaque disque de friction est lié en rotation à un arbre d'entrée de la boîte de vitesses et chaque plateau de réaction est par exemple solidaire en rotation d'un volant lié à l'arbre moteur. Ainsi, le serrage d'un disque de friction entre les plateaux de pression et de réaction correspondants permet la transmission d'un couple entre l'arbre moteur et l'arbre de la boîte de vitesses associés.

Comme précédemment, l'utilisation des embrayages provoque une usure des garnitures de friction des disques de friction ainsi que des contre-matériaux des plateaux de pression et de réaction associés. Ceci se traduit par une variation de la position de chaque plateau de pression par rapport au diaphragme associé et/ou au plateau de réaction, générant une variation de l'effort de serrage du disque de friction et une modification du point de léchage et de la course à la butée d'embrayage. Dans ce cas, le point de léchage est la position à partir de laquelle une partie du couple du moteur est transmis à l'arbre de la boîte de vitesses lors de la fermeture de l'embrayage.

De manière générale, une telle usure est plus présente au niveau du disque de friction et des plateaux de pression et de réaction appartenant au premier embrayage, c'est-à-dire à l'embrayage associé aux rapports de vitesses impairs. Ainsi, lorsque le double embrayage ne comporte qu'un seul mécanisme de rattrapage d'usure selon l'invention, celui-ci forme de préférence une partie du premier embrayage. Bien entendu, le double embrayage selon l'invention peut comporter à la fois des mécanismes de rattrapage d'usure équipant le premier embrayage et un mécanisme équipant le second embrayage.

La demande de brevet FR 3 009 592 divulgue en particulier l'utilisation d'un premier mécanisme de rattrapage d'usure équipant le premier embrayage et un second mécanisme de rattrapage d'usure équipant le second embrayage.

Dans cette demande de brevet est décrit un double embrayage comportant un plateau de réaction destiné à être couplé en rotation à un arbre menant, un premier et un second disque de friction, destinés à être couplés respectivement à un premier et un second arbres menés, un premier et un second plateau de pression, actionnés respectivement par un premier et un second diaphragme de façon à serrer ou libérer le premier et le second disque de friction sur le plateau de réaction, le premier plateau de pression étant relié fixement à un couvercle mobile en translation par rapport au plateau de réaction, et étant actionné par appui du premier diaphragme sur le couvercle mobile, des premiers moyens de détection et de rattrapage de l'usure du premier disque de friction étant intercalés entre le premier diaphragme et le couvercle mobile, des seconds moyens de détection et de rattrapage de l'usure du second disque de friction, étant intercalés entre le second diaphragme et le second plateau de pression.

En fonctionnement, le couvercle mobile est soumis à des contraintes mécaniques importantes pouvant générer des déformées rendant difficile le bon positionnement des éléments constitutifs des premiers moyens de détection et de rattrapage d'usure. Ceci peut affecter de manière sensible le bon fonctionnement des premiers moyens de détection et de rattrapage d'usure.

L'invention propose un dispositif d'embrayage à rattrapage d'usure visant à garantir la bonne position des organes de détection et de rattrapage d'usure afin d'éviter toute surcompensation ou sous-compensation de l'usure.

Par ailleurs, le dispositif vise également à absorber d'éventuelles tolérances de dimensionnement ou de montage des pièces et à réduire la course de la butée d'embrayage afin de réduire l'encombrement axial des moyens de commande de ladite butée d'embrayage.

A cet effet, elle propose un dispositif d'embrayage à rattrapage d'usure, notamment pour véhicule automobile, comportant :
- un plateau de réaction destiné à être couplé en rotation à un arbre menant, autour d'un axe de rotation,
- un disque de friction portant des garnitures de friction, destiné à être couplé à un arbre mené,
- un plateau de pression actionné par un diaphragme, optionnellement par l'intermédiaire d'une partie mobile, de façon à serrer ou libérer le disque de friction sur le plateau de réaction,
des moyens de rattrapage d'usure intercalés entre le diaphragme et une partie fixe par rapport au plateau de réaction, par exemple un couvercle fixe, ou entre le diaphragme et le plateau de pression, lesdits moyens de rattrapage d'usure comportant au moins un organe de rattrapage mobile dans une plage déterminée, lorsqu'il est libéré par le diaphragme, et comportant une rampe coopérant avec une contre-rampe tournée du côté de la partie fixe ou du plateau de pression, de façon à ajuster la distance entre le diaphragme et la partie fixe, ou respectivement entre le diaphragme et le plateau de pression,
des moyens de détection de l'usure aptes à autoriser le déplacement dudit organe de rattrapage mobile en cas d'usure et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté de la partie fixe ou du plateau de pression,
au moins un organe presseur venant contraindre au moins la rampe de l'organe de détection contre la contre-rampe associée, l'organe presseur étant apte à coopérer avec une butée fixe de manière à libérer l'organe de détection lorsqu'une usure est détectée,
caractérisé en ce qu'il comporte un organe de butée comportant une première partie reliée à l'organe presseur et une seconde partie destinée à prendre appui sur une zone d'appui de la partie fixe ou mobile du dispositif d'embrayage, ou inversement, de façon à écarter l'organe presseur de l'organe de détection et/ou de l'organe de rattrapage en cas d'usure, l'organe de butée comportant des moyens de réglage de la distance entre la première partie et la seconde partie.

Les moyens de réglage permettent ainsi d'ajuster la longueur, par exemple la longueur axiale, de l'organe de butée, afin de garantir le bon positionnement des organes de rattrapage et de détection mobiles par rapport à l'élément fixe ou mobile servant de référence.
Les moyens de détection et de rattrapage d'usure sont aptes à rattraper l'usure du disque de friction, l'usure correspondante étant compensée en fonction de la position de la rampe par rapport à la contre-rampe.

L'organe de rattrapage mobile peut être sollicité de façon à se déplacer lorsque ledit organe de rattrapage mobile est libéré par le diaphragme,

L'organe de détection mobile peut être sollicité de façon à se déplacer et à rattraper, au moins en partie, le jeu entre celui-ci et l'organe presseur, lorsque ledit organe de détection mobile est libéré par l'organe presseur et par le diaphragme,

La seconde partie de l'organe de butée peut être formée par un écrou, la première partie comportant une zone filetée coopérant avec l'écrou.

Dans ce cas, il suffit à un opérateur de faire tourner l'écrou par rapport à la première partie pour régler la distance entre les première et seconde parties de l'organe de butée.

Ladite zone d'appui peut être plane et peut s'étendre radialement, la seconde partie de l'organe de butée comportant une surface radiale plane destinée à venir en appui sur la zone d'appui plane correspondante.

En variante, ladite zone d'appui et/ou ladite seconde partie de l'organe de butée peut comporter une surface arrondie de manière à former une rotule entre ladite zone d'appui et ladite seconde partie.

La liaison rotule permet de compenser d'éventuels défauts d'alignement et de diminuer la pression de surface entre les ladite zone d'appui et ladite seconde partie.

La seconde partie de l'organe de butée peut être formée par un élément fixé par sertissage à la première partie de l'organe de butée.

Dans ce cas, la distance entre la première partie et la seconde partie est ajustée à la valeur souhaitée avant sertissage.

La première partie peut être réalisée par un fil déformable. La longueur du fil une fois tendu est fonction de la distance souhaitée entre les première et seconde parties de l'organe de butée.

L'organe de butée peut être relié à l'organe presseur dans une zone située entre l'organe de détection et de l'organe de rattrapage, on limite l'effet de basculement de l'organe presseur, un tel basculement ayant une influence sur les positions des zones d'appui réelles de l'organe presseur sur l'organe de détection et/ou sur l'organe de rattrapage. La caractéristique précitée permet ainsi de maîtriser la position desdits organes mobiles, de façon à garantir le bon fonctionnement des moyens de détection et de rattrapage d'usure correspondants et éviter une surcompensation ou une sous-compensation de l'usure.

L'organe de butée peut être relié à l'organe presseur dans une zone située radialement à mi-distance entre l'organe de détection et de l'organe de rattrapage.

L'organe presseur peut exercer un effort presseur réparti entre l'organe de détection et l'organe de rattrapage et la composante axiale de cet effort suivant l'axe X peut être appliquée sur un rayon d'application situé entre l'organe de détection et l'organe de rattrapage.

L'organe de rattrapage mobile et l'organe de détection mobile peuvent être concentriques.

L'organe de détection et l'organe de rattrapage, de forme générale circulaire, peuvent comprendre au moins une zone pourvue de renflements dans laquelle lesdits organes mobiles sont localement écartés l'un de l'autre dans la direction radiale, l'organe presseur venant appuyer sur les extrémités correspondantes des organes mobiles au niveau de ladite zone pourvue de renflements.

L'extrémité de l'organe de butée qui est reliée à l'organe presseur peut être logée dans ladite zone pourvue de renflements.

L'organe presseur peut comporter au moins une languette élastique dont une extrémité est apte à venir en appui sur l'organe de détection mobile ou sur l'organe de rattrapage mobile correspondant.

L'organe presseur peut comporter au moins deux zones de fixation avec la partie fixe ou avec le plateau de pression, lesdites zones de fixation étant écartées circonférentiellement l'une de l'autre.

L'invention concerne également un double embrayage à rattrapage d'usure, notamment pour véhicule automobile, caractérisé en ce qu'il comporte au moins un dispositif d'embrayage du type précité, le double embrayage comportant :
- au moins un plateau de réaction destiné à être couplé en rotation à un arbre menant,
- un premier et un second disques de friction portant des garnitures de friction, destinés à être couplés respectivement à un premier et un second arbre mené,
- un premier et un second plateau de pression actionnés respectivement par un premier et un second diaphragme de façon à serrer ou libérer le premier et le second disque de friction sur le plateau de réaction, le premier plateau de pression étant relié fixement à un couvercle mobile en translation par rapport au plateau de réaction, et étant actionné par appui du premier diaphragme sur le couvercle mobile,

- un couvercle fixe, fixé au plateau de réaction et logeant le second plateau de pression, le second disque de friction et/ou le second diaphragme,
- des premiers moyens de détection et de rattrapage d'usure, aptes à rattraper l'usure du premier disque de friction, les premiers moyens de détection et de rattrapage d'usure étant montés entre le premier diaphragme et le couvercle fixe,
- des seconds moyens de détection et de rattrapage d'usure, aptes à rattraper l'usure du second disque de friction, les seconds moyens de détection et de rattrapage d'usure étant montés entre le second diaphragme et le second plateau de pression,
les premiers moyens de détection et de rattrapage d'usure et les seconds moyens de détection et de rattrapage d'usure comportant chacun :
des moyens de rattrapage d'usure intercalés entre le premier diaphragme et le couvercle fixe, ou respectivement entre le second diaphragme et le second plateau de pression, lesdits moyens de rattrapage d'usure comportant au moins un organe de rattrapage mobile dans une plage déterminée et comportant une rampe coopérant avec une contre-rampe tournée du côté du couvercle fixe ou du second plateau de pression, de façon à ajuster la distance entre le premier diaphragme et le couvercle fixe, ou respectivement entre le second diaphragme et le second plateau de pression et compenser l'usure correspondante en fonction de la position de la rampe par rapport à la contre-rampe,
des moyens de détection de l'usure aptes à autoriser le déplacement dudit organe de rattrapage mobile en cas d'usure et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du couvercle fixe ou du second plateau de pression,
au moins un organe presseur venant contraindre au moins la rampe de l'organe de détection contre la contre-rampe associée, l'organe presseur étant apte à coopérer avec une butée fixe de manière à libérer l'organe de détection lorsqu'une usure est détectée,
l'organe de rattrapage mobile étant sollicité de façon à se déplacer lorsque ledit organe de rattrapage mobile est libéré par le premier diaphragme ou par le second diaphragme,
l'organe de détection mobile étant sollicité de façon à se déplacer et à rattraper, au moins en partie, le jeu entre celui-ci et l'organe presseur, lorsque ledit organe de détection mobile est libéré par l'organe presseur et par le premier diaphragme ou second diaphragme,
un organe de butée étant relié à l'un au moins des organes presseurs, l'organe de butée étant conçu pour écarter l'organe presseur de l'organe de détection et/ou de l'organe de rattrapage en cas d'usure, l'organe de butée comportant une première partie reliée à l'organe presseur et une seconde partie destinée à prendre appui sur une zone d'appui d'une partie fixe ou mobile du dispositif d'embrayage, ou inversement, l'organe de butée comportant des moyens de réglage de la distance entre la première partie et la seconde partie.

Chaque embrayage est ainsi équipé de moyens de rattrapage d'usure présentant un encombrant axial et radial réduit. L'encombrement du double embrayage est donc réduit de manière sensible.

Le premier diaphragme ou le second diaphragme peut libérer l'organe de détection mobile et empêcher le déplacement de l'organe de rattrapage mobile, en position totalement embrayée, le premier diaphragme ou second diaphragme pouvant libérer l'organe de rattrapage mobile et empêcher le déplacement de l'organe de détection mobile, en position totalement débrayée, le premier diaphragme ou le second diaphragme venant toujours en appui sur l'un au moins desdits organes mobiles entre ses positions totalement embrayée et totalement débrayée.

Chaque organe de détection mobile peut se présenter sous la forme d'un anneau comportant une extrémité apte à servir à l'appui du diaphragme correspondant et une extrémité comprenant au moins une rampe s'étendant circonférentiellement, coopérant avec la contre-rampe associée du côté du couvercle fixe ou du second plateau de pression.

Le déplacement de la rampe de l'organe de détection mobile par rapport à la contre-rampe associée peut ainsi être obtenu par pivotement de l'organe de détection mobile.

En outre, chaque organe de rattrapage mobile peut se présenter sous la forme d'un anneau comportant une extrémité apte à servir à l'appui du diaphragme correspondant et une extrémité comportant au moins une rampe s'étendant circonférentiellement, coopérant avec la contre-rampe associée tournée du côté du couvercle fixe ou du second plateau de pression.

Le déplacement de la rampe de l'organe de rattrapage mobile par rapport à la contre-rampe associée peut ainsi être obtenu par pivotement de l'organe de rattrapage mobile.

L'organe de butée peut comporter une extrémité reliée au couvercle fixe ou au couvercle mobile, et une extrémité reliée à l'organe presseur.

Selon une forme de réalisation, l'organe de butée peut comporter une extrémité apte à venir en appui sur le couvercle mobile ou sur le couvercle fixe en cas d'usure, et une extrémité fixée ou venant en appui sur l'organe presseur.

Selon une autre forme de réalisation, l'organe de butée peut comporter une extrémité fixée au couvercle mobile ou au couvercle fixe en cas d'usure, et une extrémité venant en appui sur l'organe presseur.

Le double embrayage ou le dispositif d'embrayage selon l'invention peut également comporter l'une ou plusieurs des caractéristiques suivantes :
- le premier plateau de pression est rappelé vers sa position débrayée, à l'opposé du plateau de réaction, par des premiers moyens de rappel élastique, tels par exemple que des premières languettes élastiques de rappel montées entre le premier plateau de pression et le plateau de réaction,
- le second plateau de pression est rappelé vers sa position débrayée, à l'opposé du plateau de réaction, par des seconds moyens de rappel élastique, tels par exemple que des secondes languettes élastiques de rappel montées entre le second plateau de pression et le plateau de réaction,
- lesdites languettes élastiques assurent le couplage en rotation du plateau de réaction avec les plateaux de pression,
- le premier embrayage est du type normalement ouvert,
- le second embrayage est du type normalement ouvert,
- le double embrayage comporte un seul plateau de réaction servant à l'appui du premier disque de friction et du second disque de friction,
- le premier diaphragme se présente sous la forme d'une tôle annulaire élastique et est monté basculant autour de zones d'appui du couvercle mobile,
- le second diaphragme se présente sous la forme d'une tôle annulaire élastique dont la périphérie radialement externe est montée basculante par rapport au couvercle fixe,
- un organe élastique maintient la périphérie radialement externe du second diaphragme en appui sur le couvercle fixe,
- le couvercle fixe comporte des brides radiales servant à la fixation sur le plateau de réaction, raccordées à une partie annulaire entourant, au moins en partie, le second plateau de pression, le second disque de friction et/ou le second diaphragme, ladite partie annulaire du couvercle fixe étant prolongée par une partie annulaire s'étendant radialement vers l'intérieur,
- la contre-rampe est ménagée sur la partie radiale du couvercle fixe,
- le couvercle mobile comporte une partie radialement externe s'étendant depuis le premier plateau de pression et entourant en partie le couvercle fixe, prolongée par une partie s'étendant radialement vers l'intérieur et servant à l'appui du premier diaphragme,
- l'angle des rampes desdits organes mobiles et de la contre-rampe associée est compris entre 2 et 30°,
- l'organe de détection est situé radialement à l'extérieur de l'organe de rattrapage d'usure correspondant,
- un premier organe élastique, tel par exemple qu'un ressort de traction s'étendant circonférentiellement, est monté entre l'organe de détection, d'une part et le couvercle fixe ou le second plateau de pression, d'autre part
- un second organe élastique, tel par exemple qu'un ressort en forme d'épingle, est monté entre chaque organe de détection et l'organe de rattrapage correspondant,
- le premier organe élastique exerce un effort tangentiel ou circonférentiel supérieur à l'effort tangentiel ou circonférentiel exercé par le second organe élastique,
- la longueur du premier organe élastique est importante, de façon à pouvoir solliciter le déplacement de l'organe de détection sur une grande plage angulaire, par exemple de l'ordre de 120°,
- chaque organe presseur se présente sous la forme d'une languette élastique exerçant un effort axial,
- l'organe presseur est fixé au couvercle fixe à une première extrémité, et est apte à venir en appui, à une seconde extrémité, sur l'organe de détection et sur l'organe de rattrapage d'usure correspondants, par exemple sur les premiers organes de détection et de rattrapage mobiles, de façon à contraindre les rampes en appui sur la contre-rampe,
- l'organe presseur est fixé au plateau de pression à une première extrémité, et est apte à venir en appui, à une seconde extrémité, sur l'organe de détection et sur l'organe de rattrapage d'usure correspondants, par exemple sur les seconds organes de détection et de rattrapage mobiles, de façon à contraindre les rampes en appui sur la contre-rampe,
- l'organe presseur peut interagir avec le couvercle fixe ou le couvercle mobile par l'intermédiaire d'une pièce additionnelle,
- un organe de butée est fixé sur la seconde extrémité de ladite languette élastique,
- l'organe de butée comporte une extrémité fixée, par exemple par rivetage, radialement entre l'organe de détection et l'organe de rattrapage d'usure correspondant, de préférence radialement à mi-distance entre lesdits organes mobiles, l'organe de détection et l'organe de rattrapage comportent au moins une zone dans laquelle ils sont écartés radialement l'un de l'autre,
- l'organe de détection et l'organe de rattrapage ont, en vue de face, une forme générale circulaire avec au moins une zone pourvue de renflements dans laquelle lesdits organes sont localement écartés l'un de l'autre dans la direction radiale, l'organe presseur venant appuyer sur les extrémités correspondantes des organes mobiles au niveau de ladite zone,
- au moins un organe de butée peut traverser axialement le premier diaphragme ou le second diaphragme,
- au moins un organe de butée peut traverser axialement le premier diaphragme et le couvercle mobile,
- au moins un organe de butée peut traverser axialement le second diaphragme et le couvercle fixe,
l'organe de rattrapage mobile et l'organe de détection des premiers moyens de détection et de rattrapage d'usure peuvent être situés radialement à l'extérieur ou radialement à l'intérieur de l'organe de rattrapage mobile et de l'organe de détection des seconds moyens de détection et de rattrapage d'usure, de façon à réduire l'encombrement axial. L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue de face d'un double embrayage selon une forme de réalisation de l'invention,
- la figure 2 est une demi-vue en coupe axiale selon la ligne II de la figure 1,
- la figure 3 est une demi-vue en coupe axiale selon la ligne III de la figure 1,
- les figures 4 à 7 sont des vues de détail, en coupe axiale, illustrant le montage de l'écrou sur le reste de l'organe de butée,
- les figures 8 et 9 sont des vues de détails, en perspective, du double embrayage,
- les figures 10 et 11 sont des vues schématiques illustrant le fonctionnement du premier embrayage, en l'absence d'usure,
- les figures 12 à 15 sont des vues schématiques illustrant le fonctionnement du premier embrayage, en cas d'usure,
- les figures 16 et 17 sont des vues schématiques illustrant le fonctionnement du second embrayage, en l'absence d'usure,
- les figures 18 à 21 sont des vues schématiques illustrant le fonctionnement du second embrayage, en cas d'usure,
- les figures 22 et 23 sont des vue de détails, en coupe axiale, illustrant une variante de réalisation de l'invention, l'écrou étant respectivement écarté de la surface d'appui correspondante et en appui sur ladite surface d'appui,
- la figure 24 est une vue de détail, en coupe axiale, d'une autre variante de réalisation de l'invention.

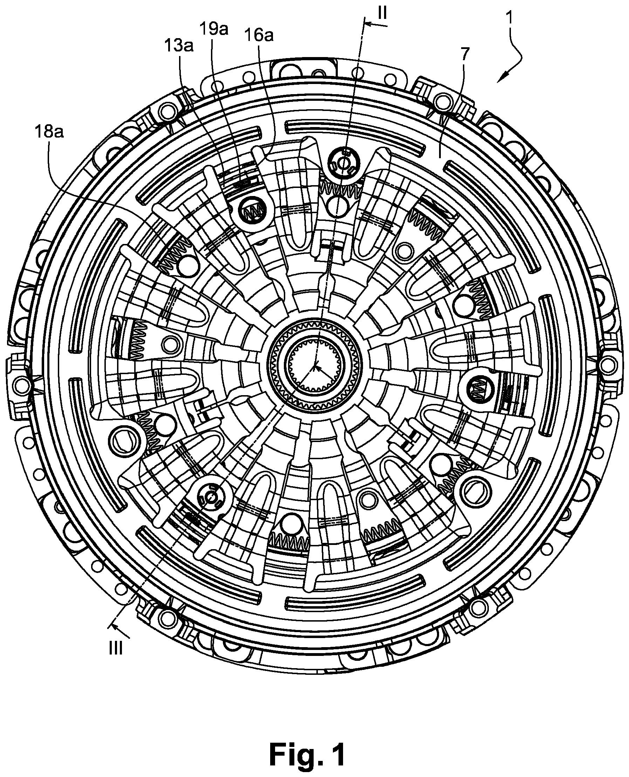

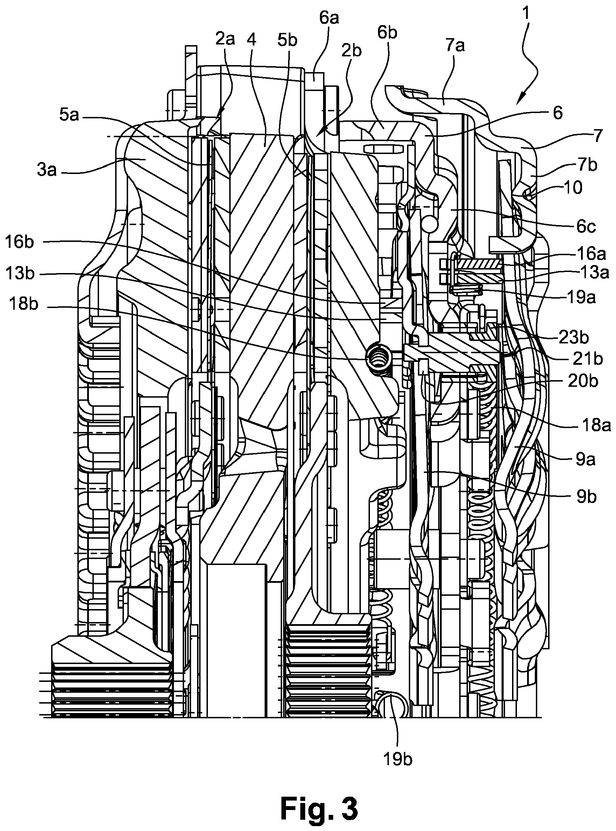

Un double embrayage 1 à rattrapage d'usure selon une forme de réalisation de l'invention est représenté aux figures 1 à 21. Celui-ci est destiné à coupler un moteur avec un premier et un second arbre d'entrée d'une boîte de vitesses (non représentés). L'axe du double embrayage est référencé X. Le double embrayage 1 comporte des premier et second embrayages 2a, 2b (également appelés mécanismes d'embrayage) de passage de rapports de parités différentes.

Le premier embrayage 2a comporte un premier plateau de pression 3a et un plateau de réaction 4 entre lesquels s'étend un premier disque de friction 5a. Le premier plateau de pression 3a est couplé en rotation au plateau de réaction 4 et est mobile en translation par rapport à celui-ci, entre une position embrayée et une position débrayée, dans lesquelles il serre le premier disque de friction 5a sur le plateau de réaction 4, ou respectivement libère le premier disque de friction 5a.

Le plateau de réaction 4 est fixé sur un couvercle 6 appelé couvercle fixe, lui-même destiné à être couplé à l'arbre du moteur. Le premier disque de friction 5a est destiné à être couplé au premier arbre d'entrée de la boîte de vitesses. Ainsi, en position embrayée du premier embrayage 2a, l'arbre du moteur est couplé au premier arbre d'entrée de la boîte de vitesses.

Le premier plateau de pression 3a est fixé sur un couvercle 7 mobile en translation par rapport au plateau de réaction 4 et au couvercle fixe 6, et s'étendant vers l'avant. Des premières languettes élastiques de rappel 8a sont montées entre le premier plateau de pression 3a et le plateau de réaction 4.

Le premier embrayage 2a comporte de plus un premier diaphragme 9a se présentant sous la forme d'une tôle annulaire élastique, et est monté basculant autour de zones d'appui 10 du couvercle mobile 7.

La commande du premier embrayage 2a se fait classiquement au moyen d'une première butée d'embrayage (non représentée) coopérant avec la périphérie radialement interne du premier diaphragme 9a. Le premier diaphragme 9a forme un levier transmettant la force appliquée par la première butée de commande au premier plateau de pression 3a, par l'intermédiaire du couvercle mobile 7.

Afin de permettre le serrage efficace du premier disque de friction 3a, le premier diaphragme 9a est pré-chargé au repos. Sans cette pré-charge, le premier diaphragme 9a serait, au repos, dans un état d'élasticité requérant un début de course de la première butée de commande relativement important pour appliquer un effort de serrage efficace sur le premier disque de friction 3a. Lorsque la première butée d'embrayage est actionnée, elle équilibre la pré-charge du premier diaphragme 9a avant de commencer le serrage du premier disque de friction 3a. La pré-charge du premier diaphragme 9a permet de réduire la course d'approche de la première butée d'embrayage afin de serrer le premier disque de friction 3a, et d'avoir toujours un effort de pré-charge minimum, par exemple sur le roulement à billes de la premier butée d'embrayage et sur le roulement à billes qui supporte le double embrayage 1. On augmente ainsi la durée de vie desdits roulements et on limite les vibrations du double embrayage 1.

Le premier embrayage 2a est du type normalement ouvert. La position de repos du premier diaphragme 9a correspond donc à un état débrayé du premier d'embrayage 2a. Le premier diaphragme 9a présente de préférence une portion du type rondelle de Belleville permettant de rappeler le premier diaphragme 9a vers sa position de repos.

En position de repos du premier diaphragme 9a, c'est-à-dire lorsque la première butée n'exerce pas ou peu d'effort sur le premier diaphragme 9a, le premier diaphragme 9a n'exerce donc pas (ou peu) d'effort sur le premier plateau de pression 3a. Le premier plateau de pression 3a est écarté du plateau de réaction 4 par l'intermédiaire des languettes élastiques 8a, de manière à libérer le premier disque de friction 5a.

Le second embrayage 2b comporte un second plateau de pression 3b, et un second disque de friction 5b s'étendant radialement entre le plateau de réaction 4 et le second plateau de pression 3b. Le même plateau de réaction 4 est ainsi utilisé pour les deux embrayages 2a, 2b, chaque disque de friction 5a, 5b étant disposé du côté de l'une des deux faces radiales d'appui du plateau de réaction 4. Des secondes languettes élastiques de rappel 8b sont montées entre le second plateau de pression 3b et le plateau de réaction 4.

Le second plateau de pression 3b est couplé en rotation au plateau de réaction 4 et est mobile en translation par rapport à celui-ci, entre une position embrayée et une position débrayée, dans lesquelles il serre le second disque de friction 5b sur le plateau de réaction 4, ou respectivement libère le second disque de friction 5b.

Le second disque de friction 5b est couplé au second arbre d'entrée de la boîte de vitesses. Ainsi, en position embrayée du second embrayage 2b, l'arbre du moteur est couplé au second arbre d'entrée de la boîte de vitesses.

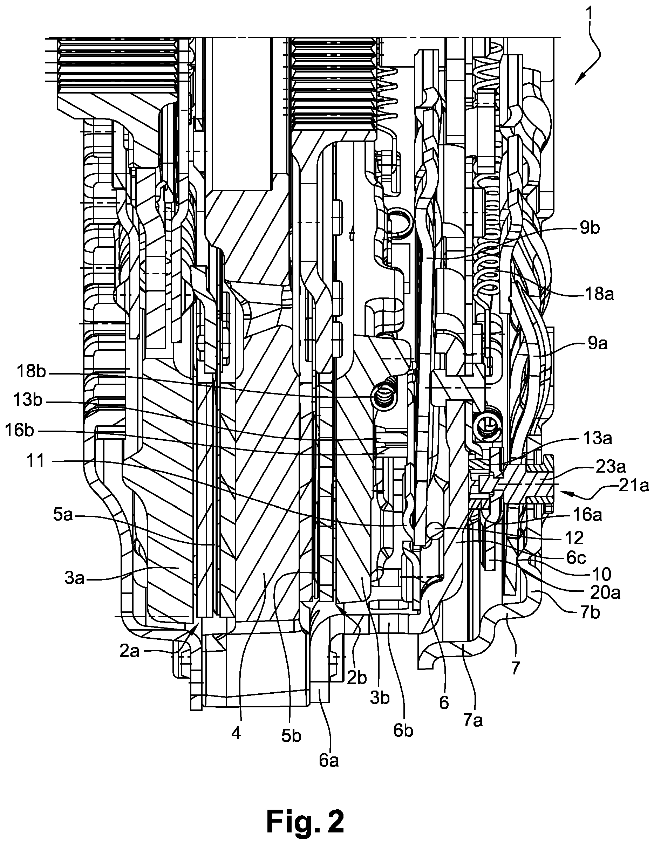

Le second embrayage 2b comporte en outre un second diaphragme 9b se présentant sous la forme d'une tôle annulaire élastique dont la périphérie radialement externe est montée basculante par rapport au couvercle fixe 6. Un organe élastique 11 maintient la périphérie radialement externe du second diaphragme en appui 12 sur le couvercle fixe 6 (figure 2).

La commande du second embrayage 2b se fait classiquement au moyen d'une seconde butée d'embrayage (non représentée) coopérant avec la périphérie radialement interne du second diaphragme 9b, par l'intermédiaire d'un organe de transmission d'effort (non représenté). Le second diaphragme 9b forme un levier transmettant la force appliquée par la seconde butée d'embrayage au second plateau de pression 3b, afin de permettre le serrage efficace du second disque de friction 5b.

Le second embrayage 2b est également du type normalement ouvert. En position de repos du second diaphragme 9b, c'est-à-dire lorsque la seconde butée de commande n'exerce pas ou peu d'effort sur le second diaphragme 9b, le second diaphragme 9b n'exerce pas (ou peu) d'effort sur le second plateau de pression 3b. Le second plateau de pression 3b est écarté du plateau de réaction 4 par l'intermédiaire des languettes élastiques 8b, de manière à libérer le second disque de friction 3b.

Le couvercle fixe 6 comporte, de l'arrière vers l'avant, des brides radiales 6a servant à la fixation sur le plateau de réaction 4, raccordées à une partie annulaire 6b entourant, au moins en partie, le second plateau de pression 3b, le second disque de friction 5b et/ou le second diaphragme 9b. Ladite partie annulaire 6b est prolongée par une partie annulaire 6c s'étendant radialement vers l'intérieur.

Par ailleurs, le couvercle mobile 7 comporte une partie radialement externe 7a s'étendant vers l'avant depuis le premier plateau de pression 3a et entourant en partie le couvercle fixe 6, prolongée à l'avant par une partie 7b s'étendant radialement vers l'intérieur et servant à l'appui 10 du premier diaphragme 9a.

Afin de compenser l'usure du premier disque de friction 5a, du premier plateau de pression 3a et/ou du plateau de réaction 4, le premier embrayage 2a est équipé de premiers moyens de détection et de rattrapage d'usure.

Les premiers moyens de rattrapage et de détection d'usure équipant le premier embrayage 2a sont intercalés axialement entre le couvercle fixe 6 et le premier diaphragme 9a, plus précisément intercalés axialement entre la partie radiale 6c du couvercle fixe 6 et le premier diaphragme 9a.

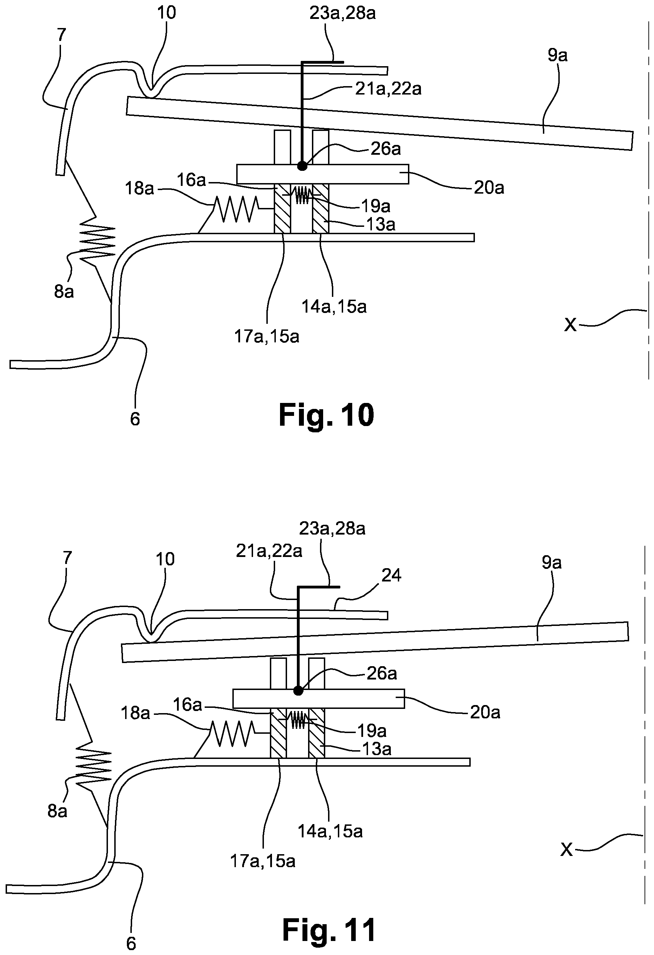

Les premiers moyens de rattrapage et de détection d'usure comportent un premier organe de rattrapage mobile 13a se présentant sous la forme d'un anneau comportant une extrémité contre laquelle le premier diaphragme 9a est apte à venir en appui, et une extrémité comportant au moins une rampe 14a (figures 10 à 15) s'étendant circonférentiellement, coopérant avec une contre-rampe 15a associée ménagée directement sur la partie radiale 6c du couvercle fixe 6. Bien entendu, la contre-rampe 15a peut être formée par une pièce indépendante et fixée sur le couvercle fixe 6.

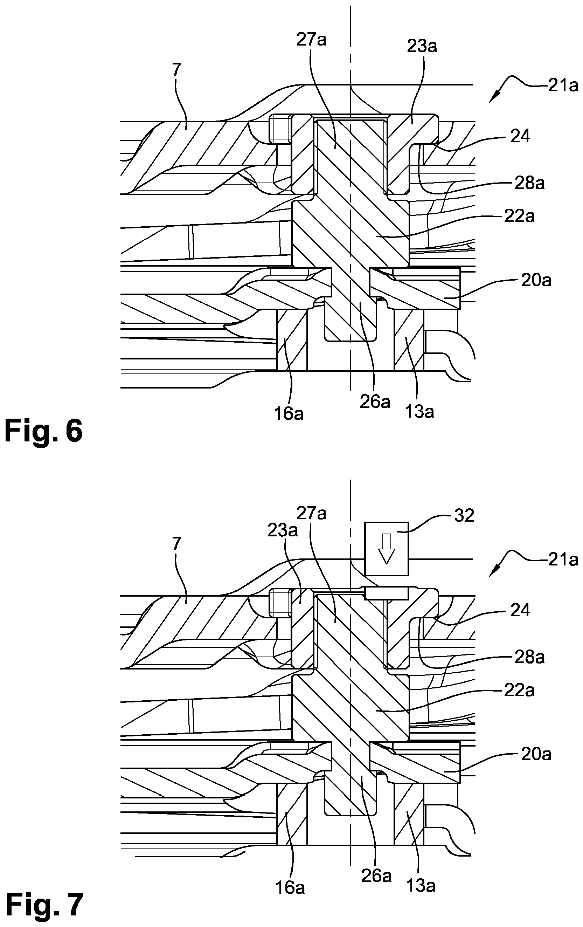

Les premiers moyens de rattrapage et de détection d'usure comportent également un premier organe de détection mobile 16a se présentant sous la forme d'un anneau ayant une extrémité contre laquelle le premier diaphragme 9a est apte à venir en appui, et une extrémité comportant au moins une rampe 17a (figures 10 à 15) s'étendant circonférentiellement, coopérant avec la contre-rampe 15a de la partie radiale 6c du couvercle fixe 6 (voir figure 6 par exemple).

A titre d'exemple, l'angle des rampes 14a, 17a desdits organes mobiles 13a, 16a et de la contre-rampe 15a du couvercle fixe 6 est compris entre 2 et 30°.

Les deux organes mobiles 13a, 16a sont concentriques et séparés l'un de l'autre, le premier organe de détection 16a étant situé radialement à l'extérieur du premier organe de rattrapage d'usure 13a. En variante, les positions respectives desdits organes mobiles 13a, 16a peuvent être inversées. On notera toutefois que la possibilité d'inversion des organes mobiles 13a, 16a est liée à l'architecture interne du mécanisme.

Des moyens de centrage, tels par exemple que de plots, assurent le bon positionnement des organes mobiles 13a, 16a.

Un premier organe élastique 18a, tel par exemple qu'un ressort de traction s'étendant circonférentiellement, est monté entre le premier organe de détection 16a et le couvercle fixe 6.

Un second organe élastique 19a, tel par exemple qu'un ressort en forme d'épingle, est monté entre le premier organe de détection 16a et le premier organe de rattrapage 13a.

La longueur du premier ressort 18a est importante, de façon à pouvoir solliciter le déplacement du premier organe de détection 16a sur une grande plage angulaire (par exemple de l'ordre de 120°).

Le premier embrayage 2a comporte également au moins un premier organe presseur 20a se présentant sous la forme d'une languette élastique exerçant un effort axial. L'organe presseur 20a s'étend circonférentiellement et présente une forme générale d'arc de cercle. Ladite languette 20a est fixée au couvercle fixe 6, à une première extrémité, et est apte à venir en appui, à une seconde extrémité, sur le premier organe de détection 16a et éventuellement sur le premier organe de rattrapage d'usure 13a, de façon à les contraindre en appui sur la partie radiale 6c du couvercle fixe 6.

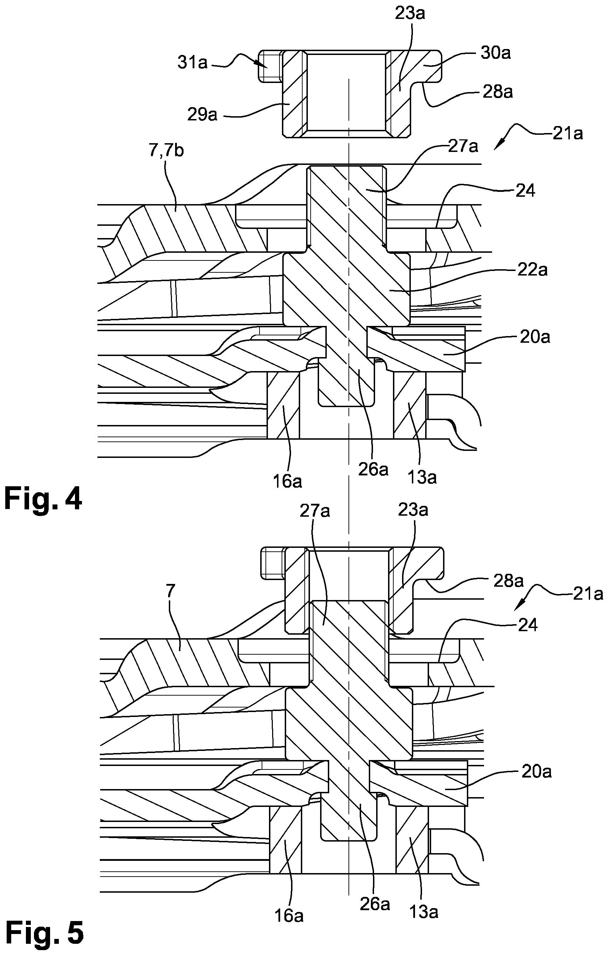

Un organe de butée 21a est fixé sur la seconde extrémité de ladite languette 20a. L'organe de butée 21a comporte en particulier une première partie 22a (figure 4) comprenant une extrémité 26a fixée, par exemple par rivetage, radialement entre le premier organe de détection 16a et le premier organe de rattrapage d'usure 13a, de préférence radialement à mi-distance entre lesdits organes mobiles 13a, 16a, et une seconde extrémité filetée 27a sur laquelle est visée un écrou 23a formant un épaulement 28a (figures 4 à 7). Le plot 21a traverse un trou du couvercle mobile 7 et l'épaulement 28a formé par l'écrou 23a est apte à venir en appui sur une surface de fond radiale formée par un lamage 24 ménagé dans le couvercle mobile 7.

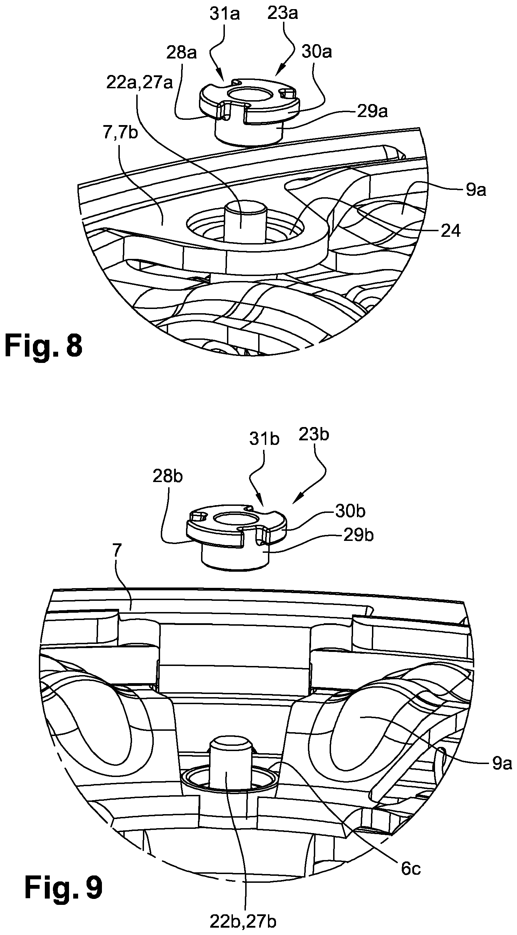

En particulier, l'écrou 23a comporte une première partie annulaire 29a et une seconde partie annulaire 30a, de plus grand diamètre que la première partie et formant l'épaulement annulaire 28a avec la première partie 29a (figures 4 et 8), la surface annulaire radiale 28a formant l'épaulement de l'écrou 23a étant destinée à venir en appui sur la surface de fond du lamage 24 lorsque le déplacement du premier plateau de pression 3a est important, c'est-à-dire lorsqu'il existe une usure importante des garnitures du premier disque de friction 5a et/ou des contre-matériaux du premier plateau de pression 3a et du plateau de réaction 4. La seconde partie 30a de l'écrou comporte des encoches 31a aptes à coopérer avec des dents d'un outil de serrage.

Ainsi, lors du montage du double embrayage 1, l'écrou 23a est engagé sur l'extrémité filetée 27a de la première partie 22a de l'organe de butée 21a (figures 4 à 6), puis la distance axiale entre la surface de l'épaulement 28a et l'extrémité 26a de la première partie 22a fixée à la languette 20a peut être réglée à la valeur souhaitée par rotation de l'écrou 23a. Une fois la bonne distance obtenue, les extrémités du taraudage et du filetage de l'écrou 23a et de la première partie 22a peuvent être déformées à l'aide d'un outil ou poinçon 32, de façon à sertir l'écrou et éviter tout dévissage accidentel (figure 7).

Bien entendu, l'écrou 23a peut être immobilisé sur la première partie 22a par tout autre moyen, par exemple par l'utilisation de colle ou frein filet, ou par l'utilisation d'un écrou auto-freiné.

En variante non représentée, l'épaulement 28a peut aussi être ajusté, par exemple par usinage, pour réaliser le réglage souhaité lorsque l'écrou 23a est vissé complètement sur l'extrémité filetée 27a.

Le fonctionnement des premiers moyens de détection et rattrapage d'usure va maintenant être décrit en référence aux figures 10 à 15.

Comme cela est illustré schématiquement aux figures 10 et 11, les premiers moyens de rattrapage et de détection d'usure sont inopérants lorsque les garnitures du premier disque de friction 5a ne sont pas ou peu usées et que les contre-matériaux du premier plateau de pression 3a et du plateau de réaction 4 associé ne sont pas usés, par exemple lorsque l'usure axiale cumulée est inférieure à 0,05 mm.

Comme illustré à la figure 10, en position totalement embrayée et en l'absence d'usure, le premier diaphragme 9a vient en appui sur le premier organe de rattrapage 13a, de façon à repousser le premier plateau de pression 3a à l'encontre des languettes élastiques de rappel 8a. Le premier plateau de pression 3a et le plateau de réaction correspondant 4 (axialement fixe) enserrent alors le premier disque de friction 5a portant les garnitures. Dans cette position, l'épaulement 28a affleure la surface de fond du lamage 24 du couvercle mobile 7.

En outre, comme illustré à la figure 11, en position totalement débrayée et en l'absence d'usure, le premier diaphragme 9a vient en appui sur le premier organe de détection 16a, un jeu étant créé entre le premier diaphragme 9a et l'extrémité correspondante du premier organe de rattrapage 13a.

On constate ainsi que, en l'absence d'usure prononcée, la seconde extrémité de la languette élastique 20a et/ou le premier diaphragme 9a maintient le premier organe de détection 16a et le premier organe de rattrapage 13a en appui sur le couvercle fixe 6, quelle que soit la phase de fonctionnement du premier embrayage 2a (embrayage/débrayage). Dans ce cas, le couple résistant généré par le frottement entre lesdits organes 13a, 16a et le couvercle fixe 6 est supérieur au couple exercé par les ressorts 18a, 19a. Lesdits organes 13a, 16a sont donc immobilisés en rotation par rapport au couvercle fixe 6, quelle que soit la phase de fonctionnement du premier embrayage 2a.

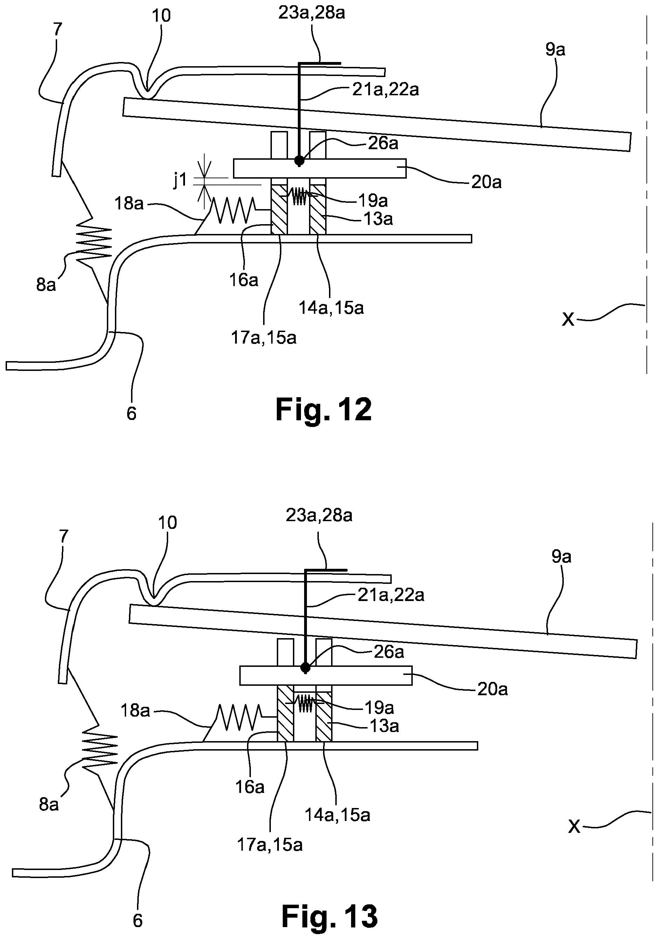

Les figures 12 à 15 illustrent le cas où les garnitures du premier disque de friction 5a (ou encore les contre-matériaux du premier plateau de pression 3a et du plateau de réaction 4) présentent une usure importante, qu'il est nécessaire de rattraper afin d'éviter un disfonctionnement du premier embrayage 2a.

Dans ce cas, comme illustré à la figure 12, l'épaulement 28a de l'organe de butée 21a vient en appui sur la surface de fond du lamage 24 du couvercle mobile 7, en position totalement embrayée, de sorte que la seconde extrémité de la languette élastique 20a se décolle de l'extrémité secondaire correspondante du premier organe de détection 16a. Un jeu j1 se forme donc entre ladite extrémité secondaire du premier organe de détection 16a et la seconde extrémité de la languette 20a.

C'est ainsi notamment qu'il peut exister un jeu axial entre le premier organe presseur 20a et l'extrémité secondaire correspondante du premier organe de rattrapage d'usure 13a, alors même que le premier organe presseur 20a est en appui sur l'extrémité secondaire correspondante du premier organe de détection 16b.

Il est possible dans certains cas que l'extrémité du premier organe de détection 16a et l'extrémité secondaire du premier organe de détection 16a soient confondues. De même, il est possible que l'extrémité du premier organe de rattrapage 13a et l'extrémité secondaire du premier organe de rattrapage 13a soient confondues.

Le premier organe de détection 16a, qui n'est alors plus soumis à un effort axial, est entraîné en rotation par le premier organe élastique 18a, de façon à combler au moins partiellement le jeu j1 (figure 13). Lors de cette rotation, le second organe élastique 19a est contraint.

La rotation du premier organe de détection 16a est par exemple stoppée lorsque l'extrémité secondaire correspondante du premier organe de détection 16a vient à nouveau en appui sur la seconde extrémité de la languette 20a. On notera que, durant cette phase, le premier organe de rattrapage 13a est maintenu en appui sur le couvercle fixe 6 par le premier diaphragme 9a. Il est donc immobilisé en rotation par rapport au couvercle fixe 6.

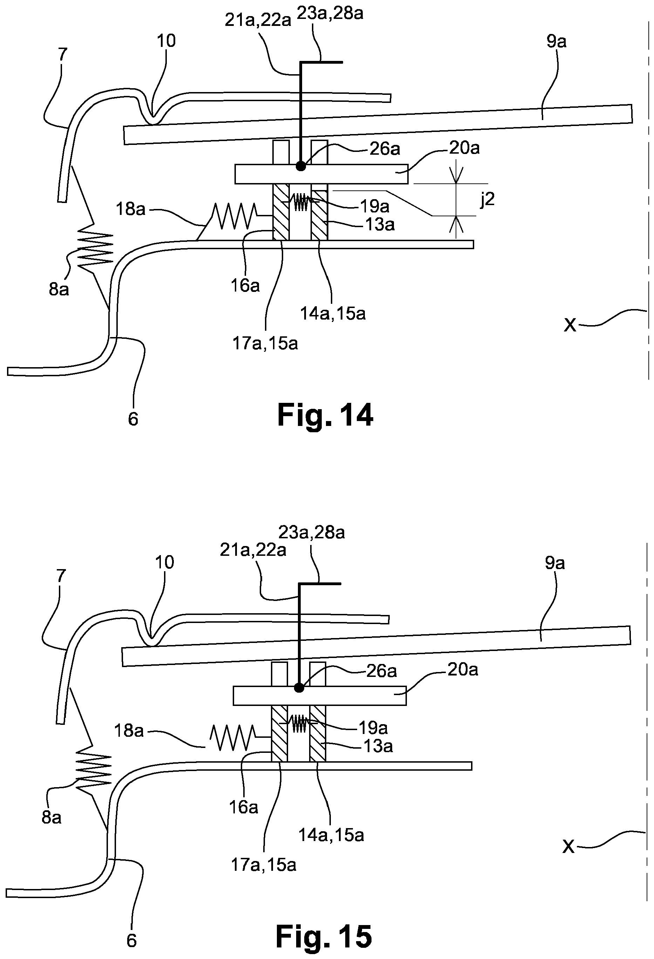

Lors de la phase de débrayage suivante, le premier diaphragme 9a transfère son appui du premier organe de rattrapage 13a vers le premier organe de détection 16a. Les figures 14 et 15 sont des vues illustrant les positions de ces éléments lors d'un tel transfert. Lors d'un tel débrayage, le premier plateau de pression 3a est écarté du plateau de réaction 4 par l'intermédiaire des languettes de rappel correspondantes 8a, de manière à libérer le premier disque de friction 5a.

Comme illustré à la figure 14, lorsque le premier diaphragme 9a est en position totalement débrayée, il libère totalement le premier organe de rattrapage 13a. Dans cette position, le premier organe de détection 16a est maintenu fixe en rotation par appui sur le premier diaphragme 9a et sur le couvercle fixe 6. Par ailleurs, l'épaulement 28a de l'organe de butée 21a est écarté de la surface de fond du lamage 24 du couvercle mobile 7 et la seconde extrémité de la languette mobile 20a est écartée d'un jeu j2 par rapport à l'extrémité secondaire correspondante du premier organe de rattrapage 13a.

Le premier organe de rattrapage 13a, contraint par le second organe élastique 19a, est donc entraîné en rotation comme illustré à la figure 15, de manière à combler tout ou partie du jeu j2 entre ledit premier organe de rattrapage 13a et la languette 20a.

Le pivotement du premier organe de rattrapage 13a et du premier organe de détection 16a par rapport au couvercle fixe 6 permet, par l'intermédiaire des rampes 14a, 17a et de la contre-rampe 15a, d'augmenter la distance axiale entre le couvercle fixe 6 et la zone d'appui du premier diaphragme 9a sur lesdits organes 13a, 16a, ce qui permet de compenser progressivement l'usure des garnitures du premier disque de friction 5a et/ou l'usure des contre-matériaux du premier plateau de pression 3a et du plateau de réaction 4.

Une telle structure permet également de conserver l'angle de fonctionnement du premier diaphragme 9a, de manière à maintenir un effort de pré-charge constant et réduire les contraintes mécaniques.

Afin de compenser l'usure du second disque de friction 5b, du second plateau de pression 3b et/ou du plateau de réaction 4, le second embrayage 2b est équipé de seconds moyens de rattrapage et de détection d'usure.

Les seconds moyens de rattrapage et de détection d'usure équipant le second embrayage 2b sont intercalés axialement entre le second diaphragme 9b et le second plateau de pression 3b.

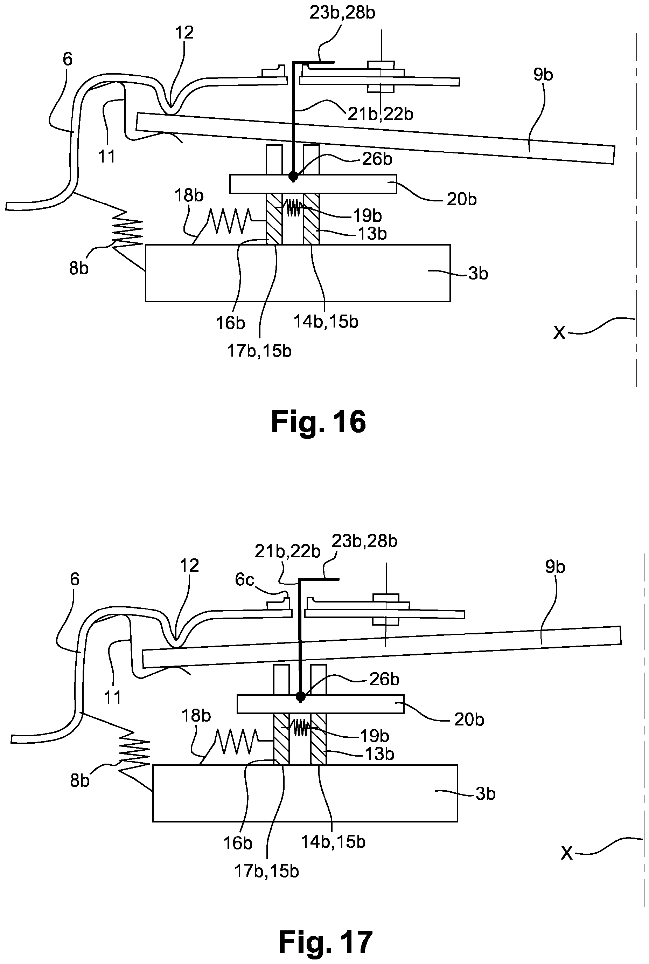

Les seconds moyens de rattrapage et de détection d'usure comportent un second organe de rattrapage mobile 13b se présentant sous la forme d'un anneau comportant une extrémité contre laquelle le second diaphragme 9b est apte à venir en appui, et une extrémité comportant au moins une rampe 14b s'étendant circonférentiellement, coopérant avec une contre-rampe associée 15b ménagée directement sur le second plateau de pression 3b (figures 16 à 21).

Les seconds moyens de rattrapage et de détection d'usure comportent également un second organe de détection mobile 16b se présentant sous la forme d'un anneau comportant une extrémité contre laquelle le second diaphragme 9b est apte à venir en appui, et une extrémité comportant au moins une rampe 17b s'étendant circonférentiellement, coopérant avec la contre-rampe 15b du second plateau de pression 3b.

A titre d'exemple, l'angle des rampes 14b, 17b desdits organes mobiles 13b, 16b et de la contre-rampe 15b du second plateau de pression 3b est compris entre 2 et 30°.

Les deux organes mobiles 13b, 17b sont concentriques et séparés l'un de l'autre par exemple par des plots de centrage et d'écartement. Dans la forme de réalisation représentée aux figures, le second organe de détection mobile 16b est situé radialement à l'extérieur du second organe de rattrapage mobile 13b correspondant. En variante, les positions respectives desdits organes mobiles 13b ,16b peuvent être inversées.

Un premier ressort de traction 18b s'étendant circonférentiellement est monté entre le second organe de détection 16b et le second plateau de pression 3b.

Un second ressort, tel par exemple qu'un ressort en forme d'épingle 19b, est monté entre le second organe de détection 16b et le second organe de rattrapage 13b.

La longueur du premier ressort 18b est importante, de façon à pouvoir solliciter le déplacement du second organe de détection 16b sur une grande plage angulaire (par exemple de l'ordre de 120°).

Le second embrayage 2b comporte également au moins un second organe presseur 20b se présentant sous la forme d'une languette élastique exerçant un effort axial. La languette 20b s'étend circonférentiellement. La longueur circonférentielle entre les extrémités primaires et secondaires et l'épaisseur définissent la raideur axiale de l'organe presseur 20b. En variante, l'organe presseur 20b peut comporter deux zones de fixation avec le plateau de pression 3b, les deux zones de fixation étant écartées circonférentiellement l'une de l'autre.

Ladite languette 20b est fixée au plateau de pression 3b, à une première extrémité, et vient en appui, à une seconde extrémité, sur l'extrémité secondaire correspondante du second organe de détection 16b et éventuellement sur le second organe de rattrapage d'usure 13b, de façon à le contraindre en appui sur le second plateau de pression 3b. C'est ainsi notamment qu'il peut exister un jeu axial entre le second organe presseur 20b et l'extrémité secondaire correspondante du second organe de rattrapage d'usure 13b, alors même que le second organe presseur 20b est en appui sur l'extrémité secondaire correspondante du second organe de détection 16b.

Un organe de butée 21b est fixé sur la seconde extrémité de ladite languette 20b. L'organe de butée 21b comporte en particulier une première partie 22b comprenant une extrémité 26b fixée, par exemple par rivetage, radialement entre le premier organe de détection 16b et le premier organe de rattrapage d'usure 13b, de préférence radialement à mi-distance entre lesdits organes mobiles 13b, 16b, et une seconde extrémité filetée 27b sur laquelle est visée un écrou 23b formant un épaulement 28b. Le plot 21b traverse un trou du couvercle fixe 6 et l'épaulement 28b formé par l'écrou 23b est apte à venir en appui sur une surface radiale 6c du couvercle fixe 6, formé directement par le couvercle fixe 6 ou par un élément fixé audit couvercle 6.

En particulier, l'écrou 23b comporte une première partie annulaire 29b (figure 9) et une seconde partie annulaire 30b, de plus grand diamètre que la première partie et formant l'épaulement annulaire 28b avec la première partie 29b. La surface annulaire radiale formant l'épaulement 28b de l'écrou 23b est destinée à venir en appui sur la surface radiale 6c correspondante lorsque le déplacement du second plateau de pression 3b est important, c'est-à-dire lorsqu'il existe une usure importante des garnitures du second disque de friction 5b et/ou des contre-matériaux du second plateau de pression 3b et du plateau de réaction 4.

Ainsi, comme précédemment, lors du montage du double embrayage, l'écrou 23b est engagé sur l'extrémité filetée 27b de la première partie 22b de l'organe de butée 21b, puis la distance axiale entre la surface de l'épaulement 28b et l'extrémité de la première partie 22b fixée à la languette 20b peut être réglée à la valeur souhaitée par rotation de l'écrou 23b. Une fois la bonne distance obtenue, les extrémités des filetages et taraudage de l'écrou 23b et de la première partie 22b peuvent être déformées à l'aide d'un outil ou poinçon, de façon à sertir l'écrou 23b et éviter tout dévissage accidentel.

Le fonctionnement des seconds moyens de détection et de rattrapage d'usure va maintenant être décrit en référence aux figures 14 à 21.

Comme cela est illustré schématiquement aux figures 16 et 17, les seconds moyens de rattrapage et de détection d'usure sont inopérants lorsque les garnitures du second disque de friction 5b ne sont pas ou peu usées et que les contre-matériaux du second plateau de pression 3b et du plateau de réaction 4 associés ne sont pas usés, par exemple lorsque l'usure axiale cumulée est inférieure à 0,05 mm.

Comme illustré à la figure 16, en position totalement embrayée et en l'absence d'usure, le second diaphragme 9b vient en appui sur le second organe de rattrapage 13b, de façon à repousser le second plateau de pression 3b à l'encontre des languettes élastiques de rappel 8b. Le second plateau de pression 3b et le plateau de réaction correspondant 4 (axialement fixe) enserrent alors le second disque de friction 5b portant les garnitures. Dans cette position, l'épaulement annulaire 28b de l'organe de butée 21b affleure la surface radiale du couvercle fixe 6.

En outre, comme illustré à la figure 17, en position totalement débrayée et en l'absence d'usure, le second diaphragme 9b vient en appui sur le second organe de détection 16b, un jeu étant créé entre le second diaphragme 9b et l'extrémité correspondante du second organe de rattrapage 13b.

On constate ainsi que, en l'absence d'usure prononcée, la seconde extrémité de la languette élastique 20b et/ou le second diaphragme 9b maintient le second organe de détection 16b et le second organe de rattrapage 13b en appui sur le second plateau de pression 3b, quelle que soit la phase de fonctionnement du second embrayage 2b (embrayage/débrayage). Dans ce cas, le couple résistant généré par le frottement entre lesdits organes 13b, 16b et le second plateau de pression 3b est supérieur au couple exercé par les ressorts 18b ,19b. Lesdits organes 13b, 16b sont donc immobilisés en rotation par rapport au second plateau de pression 3b, quelle que soit la phase de fonctionnement du second embrayage 2b.

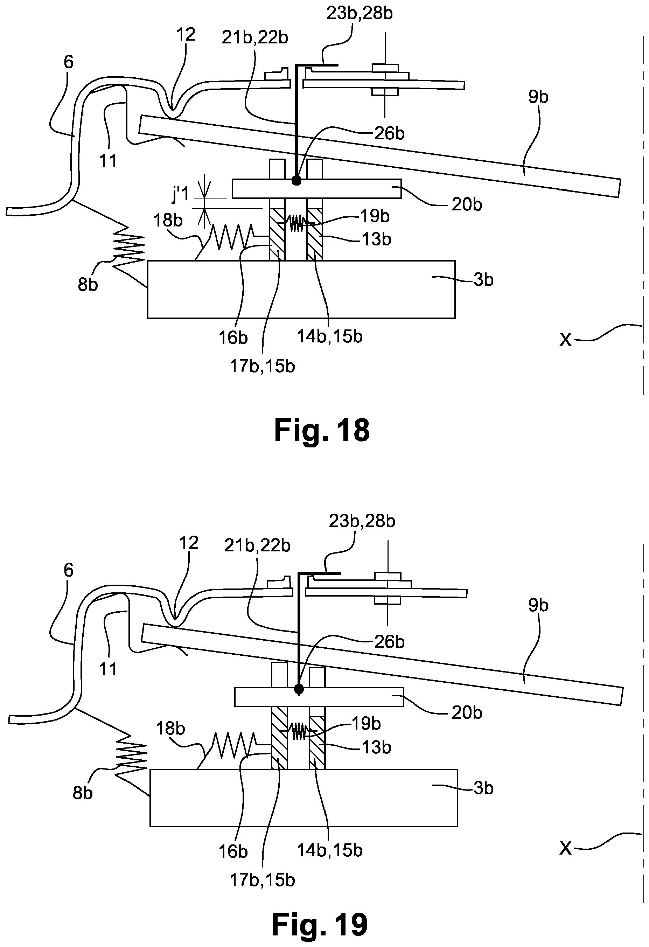

Les figures 18 à 21 illustrent le cas où les garnitures du second disque de friction 5b (ou encore les contre-matériaux du second plateau de pression 3b et du plateau de réaction 4) présentent une usure importante, qu'il est nécessaire de rattraper afin d'éviter un disfonctionnement du second embrayage 2b.

Dans ce cas, comme illustré à la figure 18, l'épaulement 28b de l'organe de butée 21b vient en appui sur la surface radiale du couvercle fixe 6, en position totalement embrayée, de sorte que la seconde extrémité de la languette élastique 20b se décolle de l'extrémité secondaire correspondante du second organe de détection 16b. Un jeu j'1 se forme donc entre ladite extrémité secondaire du second organe de détection 16b et la seconde extrémité de la languette 20b.

Il est possible dans certains cas que l'extrémité du second organe de détection 16b et l'extrémité secondaire du second organe de détection 16b soient confondues. De même, il est possible que l'extrémité du second organe de rattrapage 13b et l'extrémité secondaire du second organe de rattrapage 13a soient confondues.

Le second organe de détection 16b, qui n'est alors plus soumis à un effort axial, est entraîné en rotation par le premier organe élastique 18b, de façon à combler au moins partiellement le jeu j'1 (figure 19). Lors de cette rotation, le second organe élastique 19b est contraint.

La rotation du second organe de détection 16b est par exemple stoppée lorsque l'extrémité secondaire correspondante du second organe de détection 16b vient à nouveau en appui sur la seconde extrémité de la languette 20b. On notera que, durant cette phase, le second organe de rattrapage 13b est maintenu en appui sur le second plateau de pression 3b par le second diaphragme 9b. Il est donc immobilisé en rotation par rapport au second plateau de pression 3b.

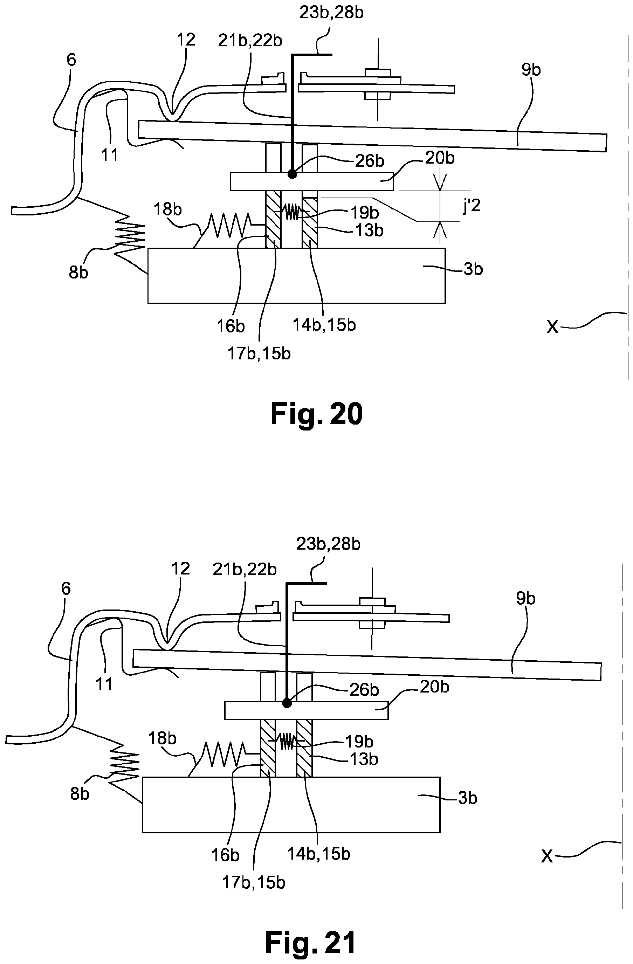

Lors de la phase de débrayage suivante, le second diaphragme 9b transfère son appui du second organe de rattrapage 13b vers le second organe de détection 16a. Les figures 20 et 21 sont des vues illustrant les positions de ces éléments lors d'un tel transfert. Lors d'un tel débrayage, le second plateau de pression 3b est écarté du plateau de réaction 4 par l'intermédiaire des languettes de rappel correspondantes 8b, de manière à libérer le second disque de friction 5b.

Comme illustré à la figure 20, lorsque le second diaphragme 9b est en position totalement débrayée, il libère totalement le second organe de rattrapage 13b. Dans cette position, le second organe de détection 16b est maintenu fixe en rotation par appui sur le second diaphragme 9b et sur le second plateau de pression 3b. Par ailleurs, l'épaulement 28b de l'organe de butée 21b est écarté de la surface radiale du couvercle fixe 6 et la seconde extrémité de la languette mobile 20b est écartée d'un jeu j'2 par rapport à l'extrémité secondaire correspondante du second organe de rattrapage 13b.

Le second organe de rattrapage 13b, contraint par le second organe élastique 19b, est donc entraîné en rotation comme illustré à la figure 21, de manière à combler tout ou partie du jeu j'2 entre ledit second organe de rattrapage 13b et la languette 20b.

Le pivotement du second organe de rattrapage 13b et du second organe de détection 16b par rapport au second plateau de pression 3b permet, par l'intermédiaire des rampes 14b, 17b, et de la contre-rampe 15b, d'augmenter la distance axiale entre le second plateau de pression 3b et la zone d'appui du second diaphragme 9b sur lesdits organes 13b, 16b, ce qui permet de compenser progressivement l'usure des garnitures du second disque de friction 5b et/ou l'usure des contre-matériaux du second plateau de pression 3b et du plateau de réaction 4.

Une telle structure permet également de conserver l'angle de fonctionnement du second diaphragme 9b, de manière à maintenir un effort de pré-charge constant et réduire les contraintes mécaniques.

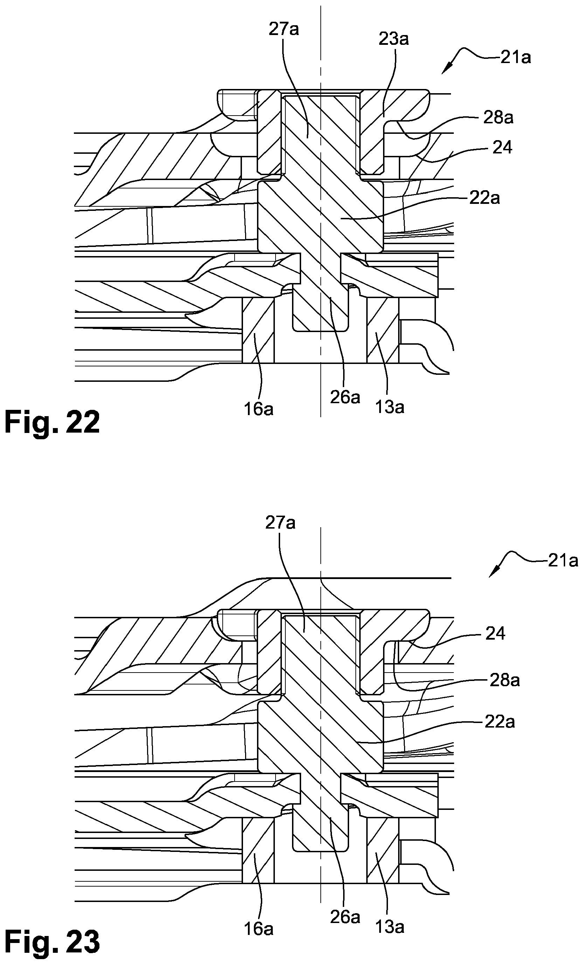

Les figures 22 et 23 illustrent une variante de réalisation qui diffère de celle exposée en référence aux figures 1 à 21 en ce que l'épaulement 28a et la surface de fond du lamage 24 relatives au premier embrayage ont chacune une forme arrondie ou en portion de sphère de façon à former une liaison rotule. Une telle liaison rotule permet de compenser d'éventuels défauts d'alignement.

Cette forme de réalisation peut également être appliquée à l'épaulement 28b et à la surface d'appui correspondante du couvercle 6 relatives au second embrayage.

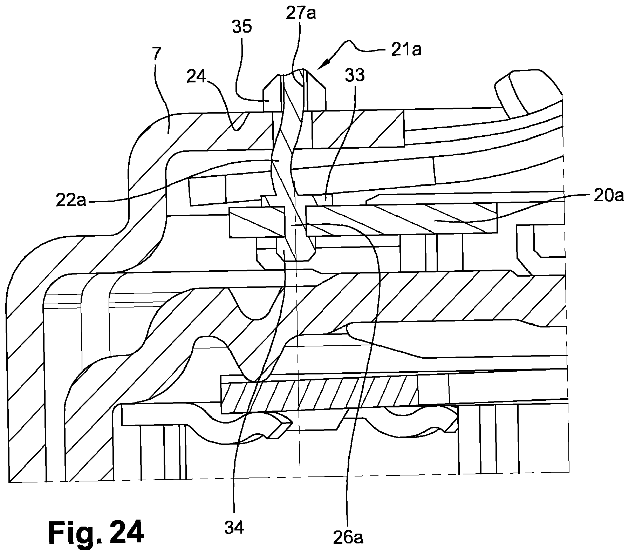

La figure 24 illustre encore une autre variante de réalisation qui diffère de celle exposée en référence aux figures 1 à 21 en ce que la première partie 22a de l'organe de butée est formée par un fil comportant une extrémité 26a équipée d'une collerette 33 et d'une tête élargie 34 disposées de part et d'autre de la languette 20a de manière à réaliser une fixation de ladite extrémité 26a sur la languette 20a.

Par ailleurs, la seconde partie de l'organe de butée 21a est formée par un organe 35 serti sur l'autre extrémité 27a de la première partie 22a, de façon à pouvoir ajuster ou régler la position axiale dudit organe 35 et en particulier sur la première partie 22a après montage.

Le fil 22a peut être déformable, la longueur dudit fil 22a une fois tendu étant fonction de la distance souhaitée entre la surface d'appui de l'organe serti 35 et la surface d'appui 24 du couvercle mobile 7, lorsqu'elles sont en appui, et l'extrémité 26a du fil 22a.

Une telle forme de réalisation est également applicable à l'organe de butée 21b du second embrayage 2b.

On notera que, dans chacune des formes de réalisation décrite ci-dessus, les plots de butée 21a, 22b sont ainsi équipés de moyens permettant de régler précisément la distance axiale entre les épaulements 28a, 28b et les extrémités 26a, 26b fixées sur les languettes 20a, 20b. De tels moyens de réglage permettent ainsi de garantir le bon positionnement des organes de rattrapage et de détection mobiles 13a, 13b, 16a, 16b par rapport à l'élément fixe ou mobile 6, 7 servant de référence.

Par ailleurs, les moyens de rappel des plateaux de pression 3a, 3b (formés par les languettes élastiques 8a, 8b) peuvent exercer un effort important, cet effort étant repris par l'organe de rattrapage mobile correspondant 13a, 13b puis par le diaphragme correspondant 9a, 9b, ou par l'organe de détection mobile correspondant 16a, 16b puis par le diaphragme correspondant 9a, 9b, en fonction de la position dudit diaphragme 9a, 9b. En effet, lors de leurs déplacements, lesdits organes mobiles 13a, 13b, 16a, 16b ne sont pas soumis à l'effort exercé par les moyens de rappel 8a, 8b du plateau de pression 3a, 3b et il est donc possible de solliciter aisément leur déplacement à l'aide des ressorts 18a, 18b, 19a, 19b, en cas d'usure.

Le fait de disposer de moyens de rappel 8a, 8b des plateaux de pression 3a, 3b exerçant des efforts importants, tels par exemple que des languettes ressorts 8a, 8b ayant une forte raideur, permet de limiter la transmission des vibrations axiales et d'éviter les phénomènes de pompage.

On notera également que les languettes 20a, 20b formant les organes presseurs sont respectivement fixées au couvercle fixe 6, et au plateau de pression 3b et ne sont donc pas soumises à des phénomènes de fatigue dus aux cycles d'embrayage et de débrayage en fonctionnement.

Le positionnement des premiers moyens de détection et de rattrapage d'usure entre le premier diaphragme 9a et le couvercle fixe 6, d'une part, et le positionnement des seconds moyens de détection et de rattrapage d'usure entre le second diaphragme 9b et le second plateau de pression 3b permet de simplifier la structure du double embrayage 1, de réduire l'encombrement radial de ce dernier et de mieux contrôler le fonctionnement desdits moyens de détection et de rattrapage d'usure en les positionnant entre des pièces qui sont soumises à de faibles déformées en fonctionnement. On maîtrise ainsi mieux les positions des organes mobiles 13a, 13b, 16a, 16b.

Par ailleurs, le fait de relier chaque organe de butée 21a, 21b à la seconde extrémité de la languette correspondante 20a, 20b, dans une zone située entre l'organe de détection l'organe de rattrapage, permet de réduire au maximum la déformation de cette seconde extrémité, de façon à contrôler au mieux les positions axiales des différents éléments mobiles 13a, 13b, 16a, 16b, et donc la correction d'usure qui en découle. On évite ou limite ainsi toute surcompensation ou sous-compensation de l'usure.

On notera que l'invention est également applicable aux embrayages de type normalement fermés.

## Revendications

1. Dispositif d'embrayage à rattrapage d'usure (1), notamment pour véhicule automobile, comportant :
- un plateau de réaction (4) destiné à être couplé en rotation à un arbre menant, autour d'un axe de rotation (X),
- un disque de friction (5a, 5b) portant des garnitures de friction, destiné à être couplé à un arbre mené,
- un plateau de pression (3a, 3b) actionné par un diaphragme (9a, 9b), optionnellement par l'intermédiaire d'une partie mobile (7), de façon à serrer ou libérer le disque de friction (5a, 5b) sur le plateau de réaction (4),
- des moyens de rattrapage d'usure (13a, 13b) intercalés entre le diaphragme (9a, 9b) et une partie (6) fixe par rapport au plateau de réaction (4), par exemple un couvercle fixe (6), ou entre le diaphragme (9a, 9b) et le plateau de pression (3a, 3b), lesdits moyens de rattrapage d'usure comportant au moins un organe de rattrapage (13a, 13b) mobile dans une plage déterminée, lorsqu'il est libéré par le diaphragme (9a, 9b), et comportant une rampe (14a, 14b) coopérant avec une contre-rampe (15a, 15b) tournée du côté de la partie fixe (6) ou du plateau de pression (3a, 3b), de façon à ajuster la distance entre le diaphragme (9a, 9b) et la partie fixe (6), ou respectivement entre le diaphragme (9a, 9b) et le plateau de pression (3a, 3b),
des moyens de détection de l'usure (16a, 16b) aptes à autoriser le déplacement dudit organe de rattrapage mobile (13a, 13b) en cas d'usure et aptes à empêcher un tel déplacement lorsque cette usure n'est pas suffisante, lesdits moyens de détection comportant au moins un organe de détection mobile (16a, 16b), dans une plage déterminée, par rapport à l'organe de rattrapage mobile (13a, 13b) et comportant une rampe (17a, 17b) coopérant avec une contre-rampe (15a, 15b) tournée du côté de la partie fixe (6) ou du plateau de pression (3b),
au moins un organe presseur (20a, 20b) venant contraindre au moins la rampe (17a, 17b) de l'organe de détection (16a, 16b) contre la contre-rampe associée (15a, 15b), l'organe presseur (20a, 20b) étant apte à coopérer avec une butée fixe de manière à libérer l'organe de détection (16a, 16b) lorsqu'une usure est détectée,
**caractérisé en ce qu'**il comporte un organe de butée (21a, 21b) comportant une première partie (22a, 22b, 26a, 26b) reliée à l'organe presseur (20a, 20b) et une seconde partie (23a, 23b, 28a, 28b) destinée à prendre appui sur une zone d'appui (24, 6c) de la partie fixe (6) ou mobile (7) du dispositif d'embrayage, ou inversement, de façon à écarter l'organe presseur (20a, 20b) de l'organe de détection (16a, 16b) et/ou de l'organe de rattrapage (13a, 13b) en cas d'usure, l'organe de butée comportant des moyens de réglage (23a, 27a, 23b, 27b) de la distance entre la première partie (22a, 22b, 26a, 26b) et la seconde partie (23a, 23b, 28a, 28b).

2. Dispositif d'embrayage (1) selon la revendication 1, **caractérisé en ce que** la seconde partie de l'organe de butée (21a, 21b) est formée par un écrou (23a, 23b), la première partie (22a, 22b) comportant une zone filetée (27a, 27b) coopérant avec l'écrou (23a, 23b).

3. Dispositif d'embrayage (1) selon la revendication 2, **caractérisé en ce que** ladite zone d'appui (24, 6c) est plane et s'étend radialement, la seconde partie (23a, 23b, 28a, 28b) de l'organe de butée (21a, 21b) comportant une surface radiale plane destinée à venir en appui sur la zone d'appui plane correspondante (24, 6c).

4. Dispositif d'embrayage (1) selon la revendication 2, **caractérisé en ce que** ladite zone d'appui (24, 6c) et/ou ladite seconde partie (23a, 23b, 28a, 28b) de l'organe de butée (21a, 21b) comporte une surface arrondie de manière à former une rotule entre ladite zone d'appui et ladite seconde partie.

5. Dispositif d'embrayage (1) selon l'une des revendications 1, 3 ou 4, **caractérisé en ce que** la seconde partie de l'organe de butée (21a, 21b) peut être formée par un élément (35) fixé par sertissage à la première partie (22a) de l'organe de butée (21a).

6. Dispositif d'embrayage (1) selon l'une des revendications 1 à 5, **caractérisé en ce que** la première partie (22a) est réalisée par un fil déformable.

7. Dispositif d'embrayage (1) selon l'une des revendications 1 à 6, **caractérisé en ce que** l'organe de butée (21a, 21b) est relié à l'organe presseur (20a, 20b) dans une zone située radialement à mi-distance entre l'organe de détection (16a, 16b) et de l'organe de rattrapage (13a, 13b).

8. Dispositif d'embrayage (1) selon l'une des revendications 1 à 7, **caractérisé en ce que** l'organe de rattrapage mobile (13a, 13b) et l'organe de détection mobile (16a, 16b) sont concentriques.

9. Dispositif d'embrayage (1) selon l'une des revendications 1 à 8, **caractérisé en ce que** l'organe de détection (16a, 16b) et l'organe de rattrapage (13a, 13b), de forme générale circulaire, comprennent au moins une zone (25) pourvue de renflements dans laquelle lesdits organes mobiles (13a, 13b, 16a, 16b) sont localement écartés l'un de l'autre dans la direction radiale, l'organe presseur (20a, 20b) venant appuyer sur les extrémités correspondantes des organes mobiles (13a, 13b, 16a, 16b) au niveau de ladite zone (25) pourvue de renflements.

10. Dispositif d'embrayage (1) selon l'une des revendications 1 à 9, **caractérisé en ce que** l'organe presseur comporte au moins une languette élastique (20a, 20b) dont une extrémité est apte à venir en appui sur l'organe de détection mobile (16a, 16b) ou sur l'organe de rattrapage mobile (13a, 13b) correspondant.

11. Dispositif d'embrayage (1) selon l'une des revendications 1 à 10, **caractérisé en ce que** l'organe presseur (20a, 20b) comporte au moins deux zones de fixation avec la partie fixe (6) ou avec le plateau de pression (3b), lesdites zones de fixation étant écartées circonférentiellement l'une de l'autre.

12. Double embrayage (1) à rattrapage d'usure, notamment pour véhicule automobile, **caractérisé en ce qu'**il comporte au moins un dispositif d'embrayage selon l'une des revendications 1 à 11, le double embrayage comportant :
- au moins un plateau de réaction (4) destiné à être couplé en rotation à un arbre menant,
- un premier et un second disques de friction (5a, 5b) portant des garnitures de friction, destinés à être couplés respectivement à un premier et un second arbre mené,
- un premier et un second plateau de pression (3a, 3b) actionnés respectivement par un premier et un second diaphragme (9a, 9b) de façon à serrer ou libérer le premier et le second disque de friction (5a, 5b) sur le plateau de réaction (4), le premier plateau de pression (3a) étant relié fixement à un couvercle (7) mobile en translation par rapport au plateau de réaction (4), et étant actionné par appui du premier diaphragme (9a) sur le couvercle mobile (7),
- un couvercle fixe (6), fixé au plateau de réaction (4) et logeant le second plateau de pression (3b), le second disque de friction (5b) et/ou le second diaphragme (9b),
- des premiers moyens de détection et de rattrapage d'usure, aptes à rattraper l'usure du premier disque de friction (5a), les premiers moyens de détection et de rattrapage d'usure étant montés entre le premier diaphragme (9a) et le couvercle fixe (6),
- des seconds moyens de détection et de rattrapage d'usure, aptes à rattraper l'usure du second disque de friction (5b), les seconds moyens de détection et de rattrapage d'usure étant montés entre le second diaphragme (9b) et le second plateau de pression (3b),
les premiers moyens de détection et de rattrapage d'usure et les seconds moyens de détection et de rattrapage d'usure comportant chacun :
des moyens de rattrapage d'usure (13a, 13b) intercalés entre le premier diaphragme (9a) et le couvercle fixe (6), ou respectivement entre le second diaphragme (9b) et le second plateau de pression (3b), lesdits moyens de rattrapage d'usure comportant au moins un organe de rattrapage (13a, 13b) mobile dans une plage déterminée et comportant une rampe (14a, 14b) coopérant avec une contre-rampe (15a, 15b) tournée du côté du couvercle fixe (6) ou du second plateau de pression (3b), de façon à ajuster la distance entre le premier diaphragme (9a) et le couvercle fixe (6), ou respectivement entre le second diaphragme (9b) et le second plateau de pression (3b) et compenser l'usure correspondante en fonction de la position de la rampe (14a, 14b) par rapport à la contre-rampe (15a),
des moyens de détection de l'usure (16a, 16b) aptes à autoriser le déplacement dudit organe de rattrapage mobile (13a, 13b) en cas d'usure et aptes à empêcher un tel déplacement lorsque cette usure n'est pas suffisante, lesdits moyens de détection comportant au moins un organe de détection mobile (16a, 16b), dans une plage déterminée, par rapport à l'organe de rattrapage mobile (13a, 13b) et comportant une rampe (17a, 17b) coopérant avec une contre-rampe (15a, 15b) tournée du côté du couvercle fixe (6) ou du second plateau de pression (3b),
au moins un organe presseur (20a, 20b) venant contraindre au moins la rampe (17a, 17b) de l'organe de détection (16a, 16b) contre la contre-rampe associée (15a, 15b), l'organe presseur (20a, 20b) étant apte à coopérer avec une butée fixe (21a, 21b) de manière à libérer l'organe de détection (16a, 16b) lorsqu'une usure est détectée,
l'organe de rattrapage mobile (13a, 13b) étant sollicité de façon à se déplacer lorsque ledit organe de rattrapage mobile (13a, 13b) est libéré par le premier diaphragme (9a) ou par le second diaphragme (9b),
l'organe de détection mobile (16a, 16b) étant sollicité de façon à se déplacer et à rattraper, au moins en partie, le jeu (j1, j'1) entre celui-ci et l'organe presseur (20a, 20b), lorsque ledit organe de détection mobile (16a, 16b) est libéré par l'organe presseur (20a, 20b) et par le premier diaphragme (9a) ou second diaphragme (9b),
un organe de butée (21a, 21b) étant relié à l'un au moins des organes presseurs (20a, 20b), l'organe de butée (21a, 21b) étant conçu pour écarter l'organe presseur (20a, 20b) de l'organe de détection (16a, 16b) et/ou de l'organe de rattrapage (13a, 13b) en cas d'usure, l'organe de butée (21a, 21b) comportant une première partie (22a, 22b, 26a, 26b) reliée à l'organe presseur (20a, 20b) et une seconde partie (23a, 23b, 28a, 28b) destinée à prendre appui sur une zone d'appui (24, 6c) d'une partie fixe (6) ou mobile (7) du dispositif d'embrayage (1), ou inversement, l'organe de butée (21a, 21b) comportant des moyens de réglage (23a, 27a, 23b, 27b) de la distance entre la première partie (22a, 22b, 26a, 26b) et la seconde partie (23a, 23b, 28a, 28b).

13. Double embrayage (1) selon la revendication 12, **caractérisé en ce que** la première partie (22a, 22b) de l'organe de butée (21a, 21b) est reliée à l'organe presseur (20a, 20b), la seconde partie (23a, 23b) de l'organe de butée (21a, 21b) étant reliée au couvercle fixe (6) ou au couvercle mobile (7).

## Patentansprüche

1. Kupplungsvorrichtung mit Verschleißnachstellung (1), insbesondere für ein Kraftfahrzeug, die aufweist:
- eine Reaktionsplatte (4), die dazu bestimmt ist, um eine Drehachse (X) mit einer Antriebswelle in Drehung gekoppelt zu werden,
- eine Reibbeläge tragende Reibscheibe (5a, 5b), die dazu bestimmt ist, mit einer Abtriebswelle gekoppelt zu werden,
- eine Druckplatte (3a, 3b), die von einer Membran (9a, 9b) betätigt wird, gegebenenfalls mittels eines beweglichen Teils (7), um die Reibscheibe (5a, 5b) auf der Reaktionsplatte (4) anzuziehen oder freizugeben,
- Verschleißnachstelleinrichtungen (13a, 13b), die zwischen die Membran (9a, 9b) und einen bezüglich der Reaktionsplatte (4) ortsfesten Teil (6), zum Beispiel einen ortsfesten Deckel (6), oder zwischen die Membran (9a, 9b) und die Druckplatte (3a, 3b) eingelegt werden, wobei die Verschleißnachstelleinrichtungen mindestens ein Nachstellelement (13a, 13b) aufweisen, das, wenn es von der Membran (9a, 9b) freigegeben wird, in einem bestimmten Bereich beweglich ist und eine Rampe (14a, 14b) aufweist, die mit einer Gegenrampe (15a, 15b) zusammenwirkt, die zur Seite oder der Druckplatte (3a, 3b) weist, um den Abstand zwischen der Membran (9a, 9b) und dem ortsfesten Teil (6) bzw. zwischen der Membran (9a, 9b) und der Druckplatte (3a, 3b) einzustellen,
- Erfassungseinrichtungen des Verschleißes (16a, 16b), die die Verschiebung des beweglichen Nachstellelements (13a, 13b) im Fall eines Verschleißes erlauben und eine solche Verschiebung verhindern können, wenn dieser Verschleiß nicht ausreichend ist, wobei die Erfassungseinrichtungen mindestens ein Erfassungselement (16a, 16b) aufweisen, das in einem bestimmten Bereich bezüglich des beweglichen Nachstellelements (13a, 13b) beweglich ist und eine Rampe (17a, 17b) aufweist, die mit einer Gegenrampe (15a, 15b) zusammenwirkt, die zur Seite des ortsfesten Teils (6) oder der Druckplatte (3b) weist, mindestens ein Presselement (20a, 20b), das mindestens die Rampe (17a, 17b) des Erfassungselements (16a, 16b) gegen die zugeordnete Gegenrampe (15a, 15b) zwingt, wobei das Presselement (20a, 20b) mit einem ortsfesten Anschlag zusammenwirken kann, um das Erfassungselement (16a, 16b) freizugeben, wenn ein Verschleiß erfasst wird,
**dadurch gekennzeichnet, dass** sie ein Anschlagelement (21a, 21b) aufweist, das einen mit dem Presselement (20a, 20b) verbundenen ersten Teil (22a, 22b, 26a, 26b) und einen zweiten Teil (23a, 23b, 28a, 28b) aufweist, der dazu bestimmt ist, sich auf einen Auflagebereich (24, 6c) des ortsfesten (6) oder beweglichen Teils (7) der Kupplungsvorrichtung aufzulegen oder umgekehrt, um im Fall des Verschleißes das Presselement (20a, 20b) vom Erfassungselement (16a, 16b) und/oder vom Nachstellelement (13a, 13b) zu entfernen, wobei das Anschlagelement Einstelleinrichtungen (23a, 27a, 23b, 27b) des Abstands zwischen dem ersten Teil (22a, 22b, 26a, 26b) und dem zweiten Teil (23a, 23b, 28a, 28b) aufweist.

2. Kupplungsvorrichtung (1) nach Anspruch 1, **dadurch gekennzeichnet, dass** der zweite Teil des Anschlagelements (21a, 21b) von einer Mutter (23a, 23b) gebildet wird, wobei der erste Teil einen Gewindebereich (27a, 27b) aufweist, der mit der Mutter (23a, 23b) zusammenwirkt.

3. Kupplungsvorrichtung (1) nach Anspruch 2, **dadurch gekennzeichnet, dass** der Auflagebereich (24, 6c) eben ist und sich radial erstreckt, wobei der zweite Teil (23a, 23b, 28a, 28b) des Anschlagelements (21a, 21b) eine ebene radiale Fläche aufweist, die dazu bestimmt ist, auf dem entsprechenden ebenen Auflagebereich (24, 6c) in Auflage zu kommen.

4. Kupplungsvorrichtung (1) nach Anspruch 2, **dadurch gekennzeichnet, dass** der Auflagebereich (24, 6c) und/oder der zweite Teil (23a, 23b, 28a, 28b) des Anschlagelements (21a, 21b) eine abgerundete Fläche aufweist, um ein Kugelgelenk zwischen dem Auflagebereich und dem zweiten Teil zu bilden.

5. Kupplungsvorrichtung (1) nach einem der Ansprüche 1, 3 oder 4, **dadurch gekennzeichnet, dass** der zweite Teil des Anschlagelements (21a, 21b) von einem Element (35) gebildet werden kann, das durch Crimpen am ersten Teil (22a) des Anschlagelements (21a) befestigt wird.

6. Kupplungsvorrichtung (1) nach einem der Ansprüche 1 bis 5, **dadurch gekennzeichnet, dass** der erste Teil (22a) von einem verformbaren Draht gebildet wird.

7. Kupplungsvorrichtung (1) nach einem der Ansprüch 1 bis 6, **dadurch gekennzeichnet, dass** das Anschlagelement (21a, 21b) mit dem Presselement (20a, 20b) in einem Bereich verbunden ist, der sich radial auf halbem Weg zwischen dem Erfassungselement (16a, 16b) und dem Nachstellelement (13a, 13b) befindet.

8. Kupplungsvorrichtung (1) nach einem der Ansprüche 1 bis 7, **dadurch gekennzeichnet, dass** das bewegliche Nachstellelement (13a, 13b) und das bewegliche Erfassungselement (16a, 16b) konzentrisch sind.

9. Kupplungsvorrichtung (1) nach einem der Ansprüche 1 bis 8, **dadurch gekennzeichnet, dass** das Erfassungselement (16a, 16b) und das Nachstellelement (13a, 13b), allgemein kreisförmig, mindestens einen mit Verdickungen versehenen Bereich (25) enthalten, in dem die beweglichen Elemente (13a, 13b, 16a, 16b) in radialer Richtung lokal voneinander entfernt sind, wobei das Presselement (20a, 20b) im Bereich des mit Verdickungen versehenen Bereichs (25) auf die entsprechenden Enden der beweglichen Elemente (13a, 13b, 16a, 16b) drückt.

10. Kupplungsvorrichtung (1) nach einem der Ansprüche 1 bis 9, **dadurch gekennzeichnet, dass** das Presselement mindestens eine elastische Zunge (20a, 20b) aufweist, von der ein Ende sich auf das bewegliche Erfassungselement (16a, 16b) oder auf das entsprechende bewegliche Nachstellelement (13a, 13b) auflegen kann.

11. Kupplungsvorrichtung (1) nach einem der Ansprüche 1 bis 10, **dadurch gekennzeichnet, dass** das Presselement (20a, 20b) mindestens zwei Befestigungsbereiche mit dem ortsfesten Teil (6) oder mit der Druckplatte (3b) aufweist, wobei die Befestigungsbereiche in Umfangsrichtung voneinander entfernt sind.

12. Doppelkupplung (1) mit Verschleißnachstellung, insbesondere für ein Kraftfahrzeug, **dadurch gekennzeichnet, dass** sie mindestens eine Kupplungsvorrichtung nach einem der Ansprüche 1 bis 11 aufweist, wobei die Doppelkupplung aufweist:
- mindestens eine Reaktionsplatte (4), die dazu bestimmt ist, in Drehung mit einer Antriebswelle gekoppelt zu werden,
- eine erste und eine zweite Reibbeläge tragende Reibscheibe (5a, 5b), die dazu bestimmt sind, mit einer ersten bzw. einer zweiten Abtriebswelle gekoppelt zu werden,
- eine erste und eine zweite Druckplatte (3a, 3b), die von einer ersten bzw. zweiten Membran (9a, 9b) betätigt werden, um die erste und die zweite Reibscheibe (5a, 5b) auf die Reaktionsplatte (4) anzuziehen oder freizugeben, wobei die erste Druckplatte (3a) fest mit einem Deckel (7) verbunden ist, der bezüglich der Reaktionsplatte (4) translationsbeweglich ist, und durch Drücken der ersten Membran (9a) auf den beweglichen Deckel (7) betätigt wird,
- einen ortsfesten Deckel (6), der an der Reaktionsplatte (4) befestigt ist und in dem die zweite Druckplatte (3b), die zweite Reibscheibe (5b) und/oder die zweite Membran (9b) untergebracht sind,
- erste Einrichtungen zur Erfassung und Nachstellung von Verschleiß, die den Verschleiß der ersten Reibscheibe (5a) nachstellen können, wobei die ersten Einrichtungen zur Erfassung und Nachstellung von Verschleiß zwischen die erste Membran (9a) und den ortsfesten Deckel (6) montiert sind,
- zweite Einrichtungen zur Erfassung und Nachstellung von Verschleiß, die den Verschleiß der zweiten Reibscheibe (5b) nachstellen können, wobei die zweiten Einrichtungen zur Erfassung und Nachstellung von Verschleiß zwischen die zweite Membran (9b) und die zweite Druckplatte (3b) montiert sind,
wobei die ersten Einrichtungen zur Erfassung und Nachstellung von Verschleiß und die zweiten Einrichtungen zur Erfassung und Nachstellung von Verschleiß je aufweisen:
Verschleißnachstelleinrichtungen (13a, 13b), die zwischen die erste Membran (9a) und den ortsfesten Deckel (6) bzw. zwischen die zweite Membran (9b) und die zweite Druckplatte (3b) eingelegt sind,
wobei die Verschleißnachstelleinrichtungen mindestens ein Nachstellelement (13a, 13b) aufweisen, das in einem bestimmten Bereich beweglich ist und eine Rampe (14a, 14b) aufweist, die mit einer Gegenrampe (15a, 15b) zusammenwirkt, die zur Seite des ortsfesten Deckels (6) oder der zweiten Druckplatte (3b) weist, um den Abstand zwischen der ersten Membran (9a) und dem ortsfesten Deckel (6) bzw. zwischen der zweiten Membran (9b) und der zweiten Druckplatte (3b) einzustellen und den entsprechenden Verschleiß abhängig von der Stellung der Rampe (14a, 14b) bezüglich der Gegenrampe (15a) zu kompensieren, Erfassungseinrichtungen des Verschleißes (16a, 16b), die die Verschiebung des beweglichen Nachstellelements (13a, 13b) im Fall eines Verschleißes erlauben und eine solche Verschiebung verhindern können, wenn dieser Verschleiß nicht ausreichend ist, wobei die Erfassungseinrichtungen mindestens ein Erfassungselement (16a, 16b) aufweisen, das in einem bestimmten Bereich bezüglich des beweglichen Nachstellelements (13a, 13b) beweglich ist und eine Rampe (17a, 17b) aufweist, die mit einer Gegenrampe (15a, 15b) zusammenwirkt, die zur Seite des ortsfesten Deckels (6) oder der zweiten Druckplatte (3b) weist,
wobei mindestens ein Presselement (20a, 20b) mindestens die Rampe (17a, 17b) des Erfassungselements (16a, 16b) gegen die zugeordnete Gegenrampe (15a, 15b) zwingt, wobei das Presselement (20a, 20b) mit einem ortsfesten Anschlag (21a, 21b) zusammenwirken kann, um das Erfassungselement (16a, 16b) freizugeben, wenn ein Verschleiß erfasst wird,
wobei das bewegliche Nachstellelement (13a, 13b) beaufschlagt wird, um sich zu verschieben, wenn das bewegliche Nachstellelement (13a, 13b) von der ersten Membran (9a) oder von der zweiten Membran (9b) freigegeben wird,
wobei das bewegliche Erfassungselement (16a, 16b) beaufschlagt wird, um sich zu verschieben und um das Spiel (j1, j'1) zwischen diesem und dem Presselement (20a, 20b) zumindest teilweise nachzustellen, wenn das bewegliche Erfassungselement (16a, 16b) vom Presselement (20a, 20b) und von der ersten Membran (9a) oder der zweiten Membran (9b) freigegeben wird,
wobei ein Anschlagelement (21a, 21b) mit mindestens einem der Presselemente (20a, 20b) verbunden ist, wobei das Anschlagelement (21a, 21b) konzipiert ist, das Presselement (20a, 20b) im Fall eines Verschleißes vom Erfassungselement (16a, 16b) und/oder vom Nachstellelement (13a, 13b) zu entfernen, wobei das Anschlagelement (21a, 21b) einen ersten Teil (22a, 22b, 26a, 26b), der mit dem Presselement (20a, 20b) verbunden ist, und einen zweiten Teil (23a, 23b, 28a, 28b) aufweist, der dazu bestimmt ist, sich auf einen Auflagebereich (24, 6c) eines ortsfesten (6) oder beweglichen Teils (7) der Kupplungsvorrichtung (1) aufzulegen oder umgekehrt, wobei das Anschlagelement (21a, 21b) Einstelleinrichtungen (23a, 27a, 23b, 27b) des Abstands zwischen dem ersten Teil (22a, 22b, 26a, 26b) und dem zweiten Teil (23a, 23b, 28a, 28b) aufweist.

13. Doppelkupplung (1) nach Anspruch 12, **dadurch gekennzeichnet, dass** der erste Teil (22a, 22b) des Anschlagelements (21a, 21b) mit dem Presselement (20a, 20b) verbunden ist, während der zweite Teil (23a, 23b) des Anschlagelements (21a, 21b) mit dem ortsfesten Deckel (6) oder mit dem beweglichen Deckel (7) verbunden ist.

## Claims

1. Clutch device (1) with compensation for wear, notably for a motor vehicle, comprising:
- a reaction plate (4) intended to be coupled in terms of rotation to a driving shaft, about an axis of rotation (X),
- a friction disc (5a, 5b) bearing friction linings, which is intended to be coupled to a driven shaft,
- a pressure plate (3a, 3b) actuated by a diaphragm (9a, 9b), optionally via a mobile part (7), so as to clamp or free the friction disc (5a, 5b) against the reaction plate (4),
- wear compensation means (13a, 13b) interposed between the diaphragm (9a, 9b) and a part (6) that is fixed with respect to the reaction plate (4), for example a fixed housing (6), or between the diaphragm (9a, 9b) and the pressure plate (3a, 3b), the said wear compensation means comprising at least one compensation member (13a, 13b) able to move in a determined range when it is freed by the diaphragm (9a, 9b) and comprising a ramp (14a, 14b) collaborating with a mating ramp (15a, 15b) facing towards the fixed part (6) or towards the pressure plate (3a, 3b) so as to adjust the distance between the diaphragm (9a, 9b) and the fixed part (6) or, respectively, between the diaphragm (9a, 9b) and the pressure plate (3a, 3b),
wear detection means (16a, 16b) able to allow the said mobile compensation member (13a, 13b) to move in the event of wear and able to prevent such a movement when this wear is not sufficient, the said detection means comprising at least one detection member (16a, 16b) able to move in a determined range with respect to the mobile compensation member (13a, 13b) and comprising a ramp (17a, 17b) collaborating with a mating ramp (15a, 15b) facing towards the fixed part (6) or the pressure plate (3b),
at least one pressing member (20a, 20b) forcing at least the ramp (17a, 17b) of the detection member (16a, 16b) against the associated mating ramp (15a, 15b), the pressing member (20a, 20b) being able to collaborate with a fixed end stop so as to free the detection member (16a, 16b) when wear is detected,
**characterized in that** it comprises an end stop member (21a, 21b) comprising a first part (22a, 22b, 26a, 26b) connected to the pressing member (20a, 20b) and a second part (23a, 23b, 28a, 28b) intended to bear against a bearing zone (24, 6c) of the fixed part (6) or the mobile part (7) of the clutch device, or vice versa, so as to separate the pressing member (20a, 20b) from the detection member (16a, 16b) and/or from the compensation member (13a, 13b) in the event of wear, the end stop member comprising means (23a, 27a, 23b, 27b) for adjusting the distance between the first part (22a, 22b, 26a, 26b) and the second part (23a, 23b, 28a, 28b).

2. Clutch device (1) according to Claim 1, **characterized in that** the second part of the end stop member (21a, 21b) is formed by a nut (23a, 23b), the first part (22a, 22b) comprising a threaded zone (27a, 27b) collaborating with the nut (23a, 23b).

3. Clutch device (1) according to Claim 2, **characterized in that** the said bearing zone (24, 6c) is planar and extends radially, the second part (23a, 23b, 28a, 28b) of the end stop member (21a, 21b) comprising a planar radial surface intended to come to bear against the corresponding planar bearing zone (24, 6c).

4. Clutch device (1) according to Claim 2, **characterized in that** the said bearing zone (24, 6c) and/or the said second part (23a, 23b, 28a, 28b) of the end stop member (21a, 21b) comprises a surface that is rounded so as to form a ball pivot between the said bearing zone and the said second part.

5. Clutch device (1) according to one of Claims 1, 3 or 4, **characterized in that** the second part of the end stop member (21a, 21b) may be formed by an element (35) attached by crimping to the first part (22a) of the end stop member (21a).

6. Clutch device (1) according to one of Claims 1 to 5, **characterized in that** the first part (22a) is produced by a deformable wire.

7. Clutch device (1) according to one of Claims 1 to 6, **characterized in that** the end stop member (21a, 21b) is connected to the pressing member (20a, 20b) in a zone situated radially midway between the detection member (16a, 16b) and the compensation member (13a, 13b).

8. Clutch device (1) according to one of Claims 1 to 7, **characterized in that** the mobile compensation member (13a, 13b) and the mobile detection member (16a, 16b) are concentric.

9. Clutch device (1) according to one of Claims 1 to 8, **characterized in that** the detection member (16a, 16b) and the compensation member (13a, 13b), of circular overall shape, comprise at least one zone (25) provided with bulges in which zone the said mobile members (13a, 13b, 16a, 16b) are locally parted from one another in the radial direction, the pressing member (20a, 20b) coming to press against the corresponding ends of the mobile members (13a, 13b, 16a, 16b) in the said zone (25) provided with bulges.

10. Clutch device (1) according to one of Claims 1 to 9, **characterized in that** the pressing member comprises at least one elastic finger (20a, 20b) one end of which is able to come to press against the mobile detection member (16a, 16b) or against the corresponding mobile compensation member (13a, 13b).

11. Clutch device (1) according to one of Claims 1 to 10, **characterized in that** the pressing member (20a, 20b) comprises at least two zones of attachment to the fixed part (6) or to the pressure plate (3b), the said attachment zones being circumferentially separated from one another.

12. Dual clutch (1) with compensation for wear, notably for a motor vehicle, **characterized in that** it comprises at least one clutch device according to one of Claims 1 to 11, the dual clutch comprising:
- at least one reaction plate (4) intended to be rotationally coupled to a driving shaft,
- a first and a second friction disc (5a, 5b) bearing friction linings, which are intended to be coupled respectively to a first and to a second driven shaft,
- a first and a second pressure plate (3a, 3b) which are respectively actuated by a first and a second diaphragm (9a, 9b) so as to clamp or free the first and second friction disc (5a, 5b) against the reaction plate (4), the first pressure plate (3a) being fixedly connected to a housing (7) capable of translational movement with respect to the reaction plate (4) and being actuated by the first diaphragm (9a) pressing against the mobile housing (7),
- a fixed housing (6), fixed to the reaction plate (4) and housing the second pressure plate (3b), the second friction disc (5b) and/or the second diaphragm (9b),
- first wear detection and compensation means able to compensate for wear of the first friction disc (5a), the first wear detection and compensation means being mounted between the first diaphragm (9a) and the fixed housing (6),
- second wear detection and compensation means able to compensate for wear of the second friction disc (5b), the second wear detection and compensation means being mounted between the second diaphragm (9b) and the second pressure plate (3b),
the first wear detection and compensation means and the second wear detection and compensation means each comprising:
wear compensation means (13a, 13b) interposed between the first diaphragm (9a) and the fixed housing (6) or, respectively, between the second diaphragm (9b) and the second pressure plate (3b), the said wear compensation means comprising at least one compensation member (13a, 13b) able to move in a determined range and comprising a ramp (14a, 14b) collaborating with a mating ramp (15a, 15b) facing towards the fixed housing (6) or towards the second pressure plate (3b), so as to adjust the distance between the first diaphragm (9a) and the fixed housing (6) or, respectively, between the second diaphragm (9b) and the second pressure plate (3b) and compensate for corresponding wear according to the position of the ramp (14a, 14b) with respect to the mating ramp (15a),
wear detection means (16a, 16b) able to allow the said mobile compensation member (13a, 13b) to move in the event of wear and able to prevent such a movement when this wear is not sufficient, the said detection means comprising at least one detection member (16a, 16b) able to move in a determined range with respect to the mobile compensation member (13a, 13b) and comprising a ramp (17a, 17b) collaborating with a mating ramp (15a, 15b) facing towards the fixed housing (6) or towards the second pressure plate (3b),
at least one pressing member (20a, 20b) forcing at least the ramp (17a, 17b) of the detection member (16a, 16b) against the associated mating ramp (15a, 15b), the pressing member (20a, 20b) being able to collaborate with a fixed end stop (21a, 21b) so as to free the detection member (16a, 16b) when wear is detected,
the mobile compensation member (13a, 13b) being urged to move when the said mobile compensation member (13a, 13b) is freed by the first diaphragm (9a) or by the second diaphragm (9b),
the mobile detection member (16a, 16b) being urged to move and to compensate, at least in part, for the play (j1, j'1) between it and the pressing member (20a, 20b) when the said mobile detection member (16a, 16b) is freed by the pressing member (20a, 20b) and by the first diaphragm (9a) or second diaphragm (9b),
an end stop member (21a, 21b) being connected to at least one of the pressing members (20a, 20b), the end stop member (21a, 21b) being designed to move the pressing member (20a, 20b) away from the detection member (16a, 16b) and/or from the compensation member (13a, 13b) in the event of wear, the end stop member (21a, 21b) comprising a first part (22a, 22b, 26a, 26b) connected to the pressing member (20a, 20b) and a second part (23a, 23b, 28a, 28b) intended to bear against a bearing zone (24, 6c) of a fixed part (6) or a mobile part (7) of the clutch device (1), or vice versa, the end stop member (21a, 21b) comprising means (23a, 27a, 23b, 27b) for adjusting the distance between the first part (22a, 22b, 26a, 26b) and the second part (23a, 23b, 28a, 28b).

13. Dual clutch (1) according to Claim 12, **characterized in that** the first part (22a, 22b) of the end stop member (21a, 21b) is connected to the pressing member (20a, 20b), the second part (23a, 23b) of the end stop member (21a, 21b) being connected to the fixed housing (6) or to the mobile housing (7).
